# EUROPEAN PATENT APPLICATION

(11) **EP 1 783 614 A1**
(43) Date of publication of application: **09.05.2007**
(21) Application number: 04771844.0
(22) Date of filing: 19.08.2004
(51) Int. Cl.: G06F 12/14, G06F 15/00, G06K 17/00

(54) **MANAGEMENT SERVICE DEVICE, BACKUP SERVICE DEVICE, COMMUNICATION TERMINAL DEVICE, AND STORAGE MEDIUM**

(71) Applicant: MITSUBISHI ELECTRIC CORPORATION, Chiyoda-ku Tokyo 100-8310 (JP)
(72) Inventor: BABA, Akihiro Mitsubishi Electric Corporation, Tokyo 1008310 (JP); SAKURAI, Shouji Mitsubishi Electric Corporation, Tokyo 1008310 (JP); KONDO, Seiichi Mitsubishi Electric Corporation, Tokyo 1008310 (JP); MUNAKA, Tatsuji Mitsubishi Electric Corporation, Tokyo 1008310 (JP); SAWAMURA, Mariko Mitsubishi Electric Corporation, Tokyo 1008310 (JP)
(74) Representative: Pfenning, Meinig & Partner GbR
(86) International application number: PCT/JP2004/011883
(87) International publication number: WO 2006/018874

(57) **Abstract**

It is an object to provide a method for invalidation and new registration of a storage medium, a method for backup of data stored in a storage medium and for restoration of backup data to a storage medium, and a method for encryption of and application of an electronic signature to data to be backed up, and for decryption of backup data to be restored and verification of a signature. A service device includes a reception unit for receiving a request for data processing regarding a storage medium from a communication terminal device connected to the storage medium, an authentication unit for performing authentication of whether or not the storage medium connected to the communication terminal device is valid, and a database for storing a public key of the storage medium, wherein, when the reception unit receives a request for invalidation of the first storage medium from the communication terminal device, and the authentication unit authenticates the second storage medium connected to the communication terminal device as a valid storage medium, the database deletes the public key of the first storage medium stored in the database.

## Description

### Technical Field

The present invention relates to a technique to realize invalidation of authentication by an existing storage medium attached to a communication terminal, such as a mobile telephone, and registration for enabling authentication by a new storage medium, through a communication network. Further, the present invention relates to a technique to realize a backup of data stored in a storage medium attached to a communication terminal, and a restoration of the backed-up data to a storage medium. Furthermore, the present invention relates to a technique to realize encryption of data to be backed up and its decryption, as well as application of an electronic signature to the data to be backed up and its verification.

### Background Art

IC cards have come to be used for credit cards, reward cards and so on to store a means for identity authentication of a user and service data. However, since IC cards can store a great amount of data, once they are lost, great damage will be caused. It is disclosed techniques to perform a backup or a recovery of stored data in case of losing such IC cards (For example, patent document 1).

Alternatively, as in the case of IC cards, there is a need in mobile telephones for backing up stored data, such as telephone numbers, addresses, memoranda, and pictures in case of losing them. To satisfy this need, techniques for performing a backup of the data stored in a mobile telephone to a server through a network are disclosed (For example, patent document 2).
Patent document 1: Japanese Unexamined Patent Publication No. 2001-155078
Patent document 2: Japanese Unexamined Patent Publication No. 2003-319460

### Disclosure of the Invention

### Problems to be Solved by the Invention

In the method disclosed in the patent document 1, when an IC card is reissued, a restoration (rewriting of backed-up data to an IC card) is performed online via a communication network. However, reissue of IC card itself has to be performed offline. As a result, a large amount of time is needed to reissue IC cards. It is sometimes necessary to perform face-to-face identity check, so that users of IC card have to attend to the issuer of IC cards (for example, a local government).

Meanwhile, in the method disclosed in the patent document 2, data of a mobile telephone to be backed up is stored in a backup server in a state of plaintext or in an encrypted state. However, it is not shown in the patent document 2 a specific method for encryption. In a method of performing encryption and decryption of the data to be backed up by a PC (Personal Computer), for example, it can be considered that an encryption key to be used in encryption and decryption is stored in a memory of the PC. In this case, software and hardware to control the encryption key becomes necessary additionally to the PC so that the encryption key cannot be read out from the PC. As a result, users of a mobile telephone hoping to encrypt and back up data have to bear additional expenses.

It is an object of the present invention to resolve these problems, and to provide a device and a method for performing invalidation of authentication and new registration of a storage medium of an IC card and a mobile telephone, etc. through a communication network, a backup of data stored in a storage medium to a server through a communication network, a restoration of backup data to a storage medium, encryption of and application of an electronic signature to data to be backed up, and decryption and verification of a signature of backup data to be restored.

### Means to Solve the Problems

To resolve the aforementioned problems, there is provided according to one aspect of the present invention a management service device including following means.
A management service device includes:
a reception unit to receive a request for data processing concerning a first storage medium from a communication terminal device connected to a second storage medium through a communication network; and
an authentication unit to perform an authentication of whether or not the second storage medium connected to the communication terminal device is valid, when the reception unit receives the request for data processing concerning the first storage medium from the communication terminal device.

The management service device, further includes a database to store a public key of the first storage medium and a public key of the second storage medium,
wherein, when the reception unit receives a request for invalidation of the first storage medium from the communication terminal device, and when the authentication unit authenticates the second storage medium connected to the communication terminal device as a valid storage medium, the database deletes the public key of the first storage medium stored in the database.

The management service device, further includes a database to store a public key of the first storage medium and a public key of the second storage medium;
wherein, when the reception unit receives a request for invalidation of the first storage medium from the communication terminal device, and when the authentication unit authenticates the second storage medium connected to the communication terminal device as a valid storage medium, the database deletes the public key of the first storage medium but does not delete the public key of the second storage medium.

The management service device, further includes:
a database to store a public key of the second storage medium; and
a certificate issuing unit to issue a certificate for certifying validity of the public key of the second storage medium,
wherein, when the reception unit receives a request for registration of a third storage medium as a new storage medium and a public key of the third storage medium from the communication terminal device, and when the authentication unit authenticates the second storage medium connected to the communication terminal device as a valid storage medium,
the certification issuing unit issues a certificate for certifying validity of the public key of the third storage medium received by the reception unit; and
the database stores the public key of the third storage medium received by the reception unit, and the certificate for certifying validity of the public key of the third storage medium, which is issued by the certificate issuing unit.

The management service device, further includes a database to store a public key of the first storage medium with a certificate for certifying validity of the public key of the first storage medium, and a public key of the second storage medium with a certificate for certifying validity of the public key of the second storage medium,
wherein the database registers the public key of the first storage medium with the certificate for certifying validity of the public key of the first storage medium, and the public key of the second storage medium with the certificate for certifying validity of the public key of the second storage medium, as a pair.

The management service device, further includes a database to store a public key of a storage medium and a certificate for certifying validity of the public key,
wherein the database stores public keys of a plurality of storage media and certificates for certifying validity of a plurality of public keys as a group,
and wherein, when the authentication unit performs an authentication of whether or not a storage medium is valid, by using at least one public key belonging to the group, and when the authentication unit authenticates the storage medium as a valid storage medium, the authentication unit authenticates the storage medium as a storage medium belonging to the group.

A backup service device includes:
a reception unit to receive data stored in a first storage medium and a request for storing the data as backup data from a communication terminal device connected to the first storage medium through a communication network, and to receive a request for transmitting the backup data from a communication terminal device connected to a second storage medium through a communication network;
an authentication unit to perform an authentication of whether or not the first storage medium connected to the communication terminal device is valid, when the reception unit receives the request for storing the data stored in the first storage medium as backup data from the communication terminal device connected to the first storage medium, and to perform an authentication of whether or not the second storage medium connected to the communication terminal device is valid, when the reception unit receives the request for transmitting the backup data from the communication terminal device connected to the second storage medium;
a backup unit to store the data stored in the first storage medium received by the reception unit as backup data, when the authentication unit authenticates the first storage medium connected to the communication terminal device as a valid storage medium; and
a transmission unit to transmit the backup data stored in the backup unit to the communication terminal device connected to the second storage medium, through the communication network, when the authentication unit authenticates the second storage medium connected to the communication terminal device as a valid storage medium.

The backup data is encrypted by using a public key of the second storage medium by the communication terminal device connected to the first storage medium.

The backup data is applied an electronic signature by using a private key of the first storage medium by the communication terminal device connected to the first storage medium.

A communication terminal device includes:
a key access unit connecting to either a first storage medium for storing a first public key, a first private key corresponding to the first public key and data, or a second storage medium for storing a second public key, a second private key corresponding to the second public key and data, to perform a readout of the first public key and the first private key from the first storage medium and a writing of the first public key and the first private key to the first storage medium, and to perform a readout of the second public key and the second private key from the second storage medium and a writing of the second public key and the second private key to the second storage medium;
a data access unit to perform a readout of the data from the first storage medium and a writing of the data to the first storage medium, and to perform a readout of the data from the second storage medium and a writing of the data to the second storage medium;
a memory unit to store the first public key and the first private key read out from the first storage medium by the key access unit, and the second public key and the second private key read out from the second storage medium by the key access unit;
a transmission unit to transmit data; and
a reception unit to receive data.

The communication terminal device, further includes an encryption unit to encrypt data by using the second public key,
wherein the first storage medium stores the second public key of the second storage medium;
the key access unit reads out the second public key from the first storage medium, and stores the second public key in the memory unit;
the data access unit reads out the data from the first storage medium;
the encryption unit encrypts the data read out from the first storage medium by the data access unit, by using the second public key stored in the memory unit; and
the transmission unit transmits the data encrypted by the encryption unit.

The communication terminal device, further includes a decryption unit to decrypt data encrypted by using the second private key,
wherein the reception unit receives the data encrypted;
the key access unit reads out the second private key from the second storage medium, and stores the second private key in the memory unit;
the decryption unit decrypts the data encrypted, which is received by the reception unit, by using the second private key stored in the memory unit; and
the data access unit writes the data decrypted by the decryption unit to the second storage medium.

The communication terminal device, further includes an electronic signature unit to apply an electronic signature to data by using the first private key,
wherein the memory unit reads out the first private key from the first storage medium by the key access unit;
the data access unit reads out the data from the first storage medium;
the electronic signature unit to apply an electronic signature to the data read out from the first storage medium by the data access unit, by using the first private key stored in the memory unit; and
the transmission unit transmits the data whereto the electronic signature is applied by the electronic signature unit.

The communication terminal device, further includes a verification unit to verify data whereto an electronic signature is applied by using the first public key,
wherein the second storage medium stores the first public key of the first storage medium;
the reception unit receives data whereto an electronic signature is applied;
the key access unit reads out the first private key from the second storage medium, and stores the first private key in the memory unit; and
the verification unit verifies the data whereto the electronic signature is applied, which is received by the reception unit, by using the first public key stored in the memory unit.

A storage medium includes a processing unit as at least any one of:
an input/output unit to perform a data input from outside and a data output to outside;
a key generation unit to generate a private key and a public key corresponding to the private key;
an encryption unit to perform an encryption of data by using the public key;
a decryption unit to perform a decryption of the data encrypted by using the private key;
a signature unit to apply an electronic signature to data by using the private key; and
a verification unit to perform a verification of the data whereto the electronic signature is applied, by using the public key.

The storage medium, further includes a user authentication unit to perform an authentication of whether or not a user of the storage medium is valid,
wherein, when the user authentication unit authenticates the user as a valid user, an operation of the processing units comprised in the storage medium is performed.

The storage medium cannot be read out the private key from outside.

### Effect of the Invention

According to the present invention, when the first storage medium is lost, it is possible for a management service device to receive a request for invalidation of the first storage medium from a communication terminal device connected to the second storage medium through a communication network, to perform authentication of the second storage medium connected to the communication terminal device, and if the validity is confirmed, to invalidate the first storage medium by deleting a public key of the first storage medium from a database, based on an authority of the second storage medium.

### Preferred Embodiments for Carrying Out the Invention

Embodiment 1.
In the first embodiment as mentioned below, it is explained an embodiment wherein, when a user loses one of two storage media the user possesses, by requesting invalidation of the storage medium to a management service device through the internet based on an authority of the other storage medium, a public key of a lost storage medium is deleted and the lost storage medium is rendered unavailable. Further, it is explained an embodiment
wherein, by requesting registration of a new storage medium to the management service device via the internet based on the authority of the other storage medium, a public key of a new storage medium and its certificate are registered. It is here assumed that X. 509, standard specifications for a certificate of the public key specified by International Telecommunication Union (ITU) is used for certificates. Therefore, a certificate for certifying validity of a public key contains the public key.

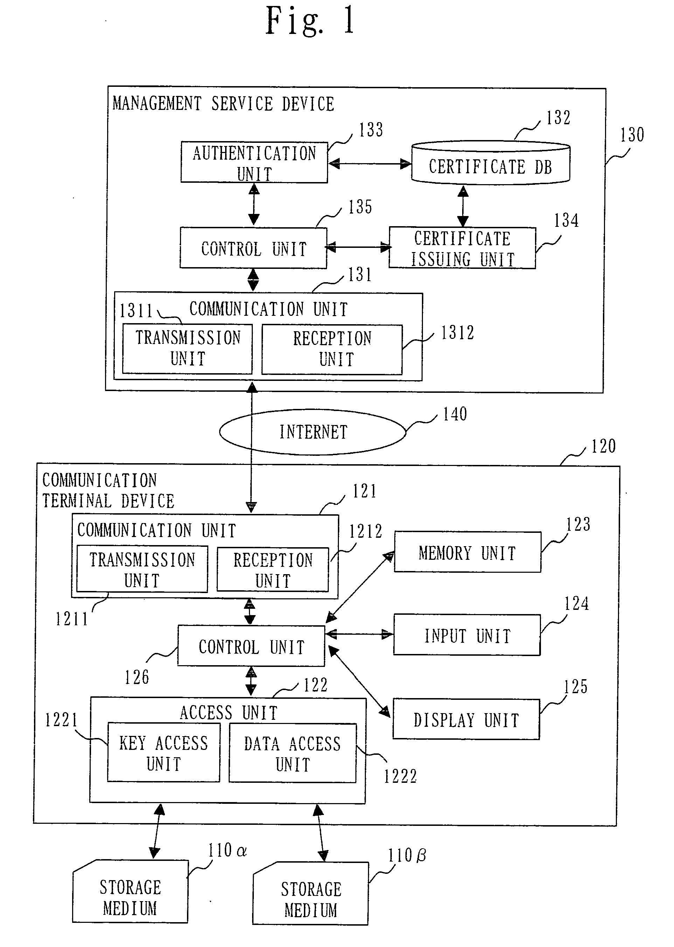

Fig. 1 is a diagram describing a structure of a key management system according to the first embodiment.
The key management system includes a communication terminal device 120 to request a provision of services through an internet 140 as a communication network, two storage media 110α and 110β to store a private key, a public key corresponding to the private key, and a certificate for certifying validity of the public key, a management service device 130 to perform authentication of either one of the storage medium 110α and the storage medium 110β connected to the communication terminal device 120, when the communication terminal device 120 requests a provision of services, and the internet 140 to connect the management service device 103 and the communication terminal device 120.

The storage medium 110α and the storage medium 110β are non-volatile storage media used by a user, examples of which are non-volatile memory media, external hard disk drives, etc. The storage medium 110α is regularly attached to the communication terminal device 120 and used, and the storage medium 110β is held as a backup. The storage medium 110α regularly used may be hereinafter described as primary, and the storage medium 110β held as a backup may be described as secondary. Meanwhile, the storage medium 110α and the storage medium 110β may be both together described simply as storage media 110.

The communication terminal device 120 includes a communication unit 121 to communicate with the management service device 130 via the internet 140, an access unit 122 to perform readout from the storage medium 120α or the storage medium 110β, and writing in the storage medium 120α and the storage medium 110β, a memory unit 123 to temporarily store the data read out by the access unit 122, an input unit 124 to receive an operational input from a user, a display unit 125 to display information to the user, and a control unit 126 to control them, a preferred example of which is a mobile telephone terminal.

The communication unit 121 includes a transmission unit 1211 to transmit data to the management service device 130 and a reception unit 1212 to receive data from the management service device 130.

The access unit 122 includes a key access unit 1221 to perform writing of a public key and a private key in the storage media 110 and readout of a public key and a private key from the storage media 110, and a data access unit 1222 to perform writing of data in the storage media 110 and readout of data from the storage media 110.

The management service device 130 includes a communication unit 131 to communicate with the communication terminal device 120 via the internet 140, a certificate database (DB) 132 to manage a public key unique to the storage media 110 and a certificate containing the public key to certify validity of the public key, an authentication unit 133 to perform authentication of the storage media 110 storing the public key by using the certificate for the public key, a certificate issuing unit 134 to issue a new certificate, and a control unit 135 to control them.

The communication unit 131 includes a transmission unit 1311 to transmit data to the communication terminal device 120 and a reception unit 1312 to receive data from the communication terminal device 120.

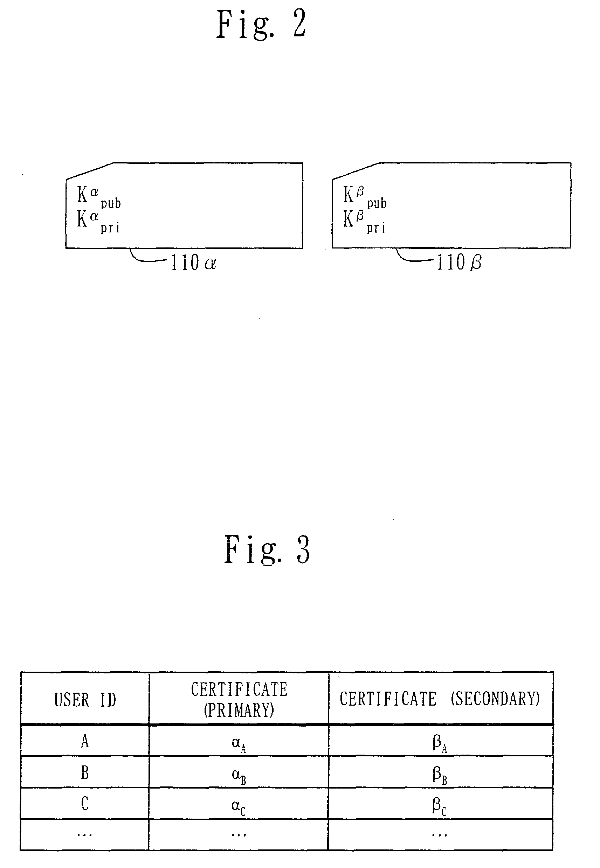

As shown in Fig. 2, the storage medium 110α and the storage medium 110β each connects to the communication terminal device, and stores a private key, a public key corresponding to the private key, and a certificate for certifying validity of the public key. In Fig. 2, K^{α}_{pub} and K^{β}_{pub} indicate public keys of the storage medium 110α and the storage medium 110β respectively, and K^{α}ₚᵣᵢ and K^{β}ₚᵣᵢ indicate private keys of the storage medium 110α and the storage medium 110β respectively.

The certificate DB 132 stores a user list showing correspondence between a user possessing the storage media 110 and certificates for public keys stored in the storage media 110, and a revocation list showing a revoked certificate for a public key.

The management service 130 includes the certificate database 132 to store the public key of the first storage medium 110α, the certificate for certifying validity of the public key of the first storage medium 110α, the public key of the second storage medium 110β, and the certificate for certifying validity of the public key of the second storage medium 110β. The certificate database 132 registers the certificate for certifying validity of the public key of the first storage medium 110α with the public key of the first storage medium 110α, and the certificate for certifying validity of the public key of the second storage medium 110β with the public key of the second storage medium 110β, as a pair.

Fig. 3 describes an example of the user list. A user ID is an ID to uniquely identify a user in the whole system. A certificate (primary) is a certificate for a public key stored in a primary storage medium α possessed by the user, whereas a certificate (secondary) is a certificate for a public key stored in a secondary storage medium β possessed by a user. A certificate for a public key contains, as its element, a public key itself. In Fig. 3, for example, α_{A} describes a certificate for a public key stored in a primary storage medium 110α of a user A, β_{A} describes a certificate for a public key stored in a secondary storage medium 110β of the user A, respectively. The same is equally true of users B and C.

Next, it is described a method for making a lost storage medium unavailable when a user loses either of two storage media 110 the user possesses, by the communication terminal device 120 in the key management system requesting invalidation of the storage medium to the management service device 130 via the internet, based on authority of the other storage medium 110, to delete a public key of the lost storage medium. It is hereinafter described as an object of authentication a storage medium, however, the final purpose of authentication is to confirm validity of the user possessing a storage medium, and confirming validity of a storage medium by authentication is equivalent to confirming validity of the user possessing the storage medium

In the management service device 130, the reception unit 1312 receives a request for data processing regarding the first storage medium 100α via the internet 140 as the communication network, from the communication terminal device 120 connected to the second storage medium 110β. When the reception unit 1312 receives the request for data processing regarding the first storage medium 11 0α from the communication terminal device 120, the authentication unit 133 performs authentication of whether or not the second storage medium 110β connected to the communication terminal device 120 is valid.

In the management service device 130, the certificate database 132 stores the public key of the first storage medium 110α and the public key of the second storage medium 110β. When the reception unit 1312 receives a request for invalidation of the first storage medium 110α from the communication terminal device 120, and when the authentication unit 133 authenticates the second storage medium 110β connected to the communication terminal device 120 as a valid storage medium, the certificate database 132 deletes the public key of the first storage medium 110α it stores.

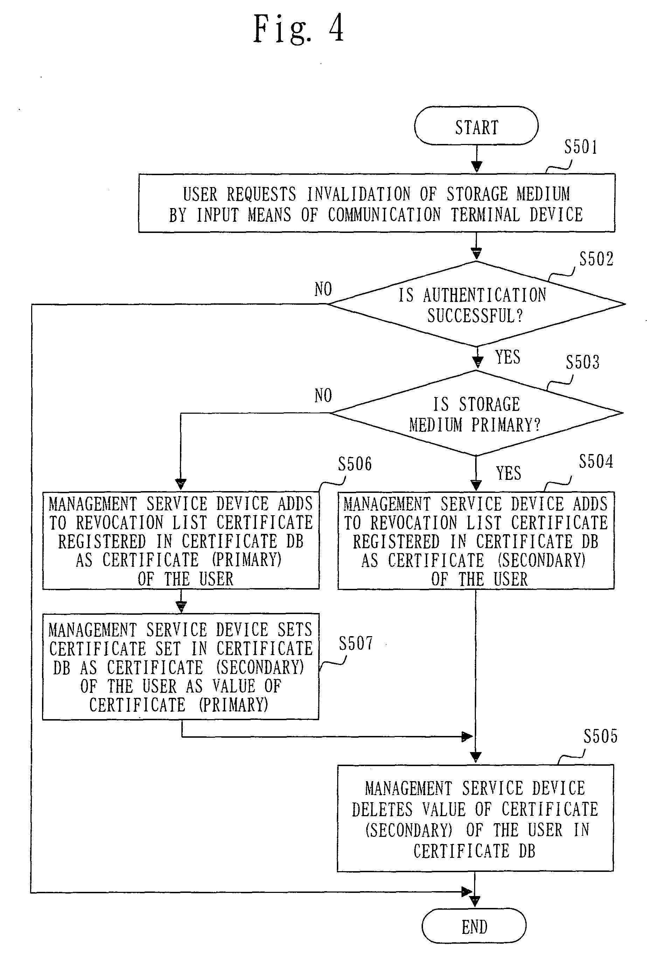

A specific method for invalidating a storage medium in a case, such as a user loses the storage medium 110α or the storage medium 110β, is explained by using a flowchart described in Fig. 4. Invalidation of a storage medium is realized by deleting a public key stored in the certificate DB 132 of the management service device 130, so that it is impossible to authenticate when authentication is requested to the management service device 130.

A user requests invalidation of the storage media 110 by the input unit 124 of the communication terminal device 120 (Step S501). The communication terminal device 120 transmits a request for invalidation of a storage medium to the management service device 130, and the management service device 130 performs authentication (a method for authentication is described below) of the storage medium 110 the communication terminal device 120 connects, and determines whether or not authentication is successful (Step S502). When it is not determined successful (in a case of "No" in Step S502), invalidation cannot be continued, and the processing ends. When it is determined successful (in a case of "yes" in Step S502), the management service device 130 determines whether or not the storage medium 110 authenticated in Step S502 is the primary storage medium 110α (Step S503). When it is the primary storage medium 110α (in a case of "yes " in Step S503), that is, the lost medium is the secondary storage medium 110β, the management service device 130 adds the certificate (secondary) of the user possessing the primary storage medium 110α indicated on the user list in the certificate DB 132 to the revocation list (Step S504), and deletes the public key of the secondary storage medium β included in the certificate (secondary). When the authenticated storage medium in Step S502 is not the primary storage medium 110α (in a case of "No" in Step S503), that is, the lost medium is the primary storage medium 110α, the management service device 130 adds the certificate (primary) of the user possessing the secondary storage medium 110β indicated on the user list in the certificate DB 132 to the revocation list (Step S506), deletes the public key included in the certificate (primary), and then indicates the public key included in the certificate (secondary) as a public key included in the certificate (primary) (Step S507). After that, the public key included in the certificate (secondary) is deleted (Step S505).

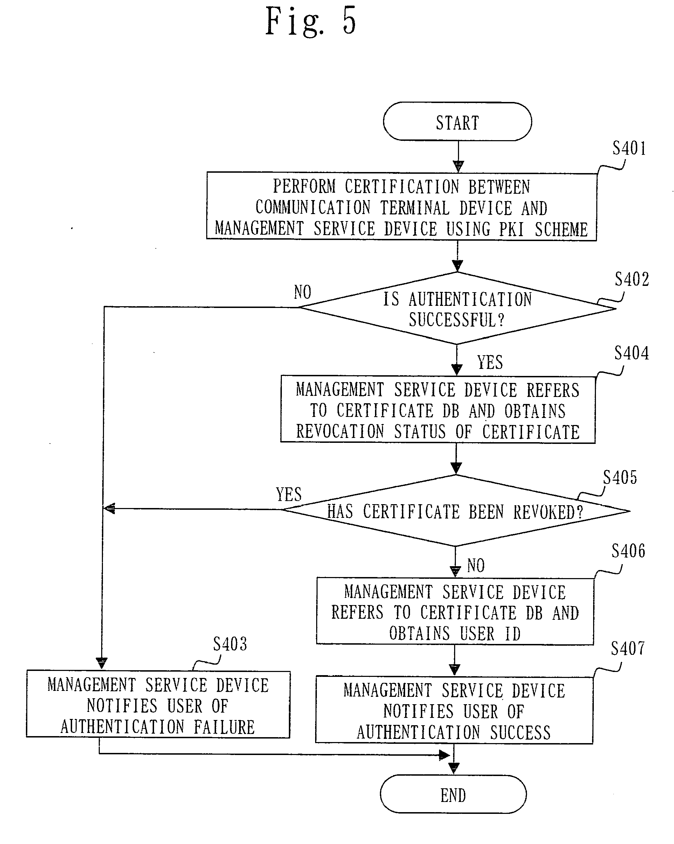

A specific method for the authentication performed in Step S502 in the specific method for invalidation is explained by using a flowchart described in Fig. 5.
When a user requests a service to the management service device 130 via the internet 140 from the communication terminal device 120, authentication of a storage medium connected to the communication terminal device 120 is performed by the management service device 130, and after it is confirmed that the user possessing the storage medium is valid by authenticating the storage medium, the service is provided.

The management service device 130 performs authentication of the storage media 110 connected to the communication terminal device 120 by using a PKI (Public Key Infrastructure) scheme employing a public key and a private key stored in the storage media 110 (Step S401). The management service device 130 determines whether or not the authentication is successful (Step S402). When it is not determined successful (in a case of "No" in Step S402), the management service device 130 reports to the user through the communication terminal device 120 that it fails in authentication since validity of the storage medial 10 cannot be confirmed (Step S403), and the processing ends. When it is determined successful (in a case of "yes" in Step S402), the management service device 130 refers to the revocation list in the certificate DB 132 and obtains revocation status of the certificate for the public key stored in the storage media 110 (Step S404) to determine whether or not the certificate for the public key has been revoked (Step S405). When it has been revoked (in a case of "yes" in Step S405), the management service device 130 reports to the user through the communication terminal device 120 that it fails in authentication since the certification for the public key has been revoked (Step S403), and the processing ends. When it has not been revoked (in a case of "No" in Step S405), the management service device 130 refers to the user list in the certificate DB 132, and obtains a user ID of the user corresponding to the certificate for the public key, which has not been revoked (Step S406). After that, the management service device 130 reports to the user through the communication terminal device 120 that validity of the user possessing the storage medium is confirmed by authentication (Step S407).

The user ID is obtained from the user list in the certificate DB 132 in Step S506 in this case, however, it is also possible to use information of where to issue (Subject) included in the certificate specified by X. 509 as a user ID.

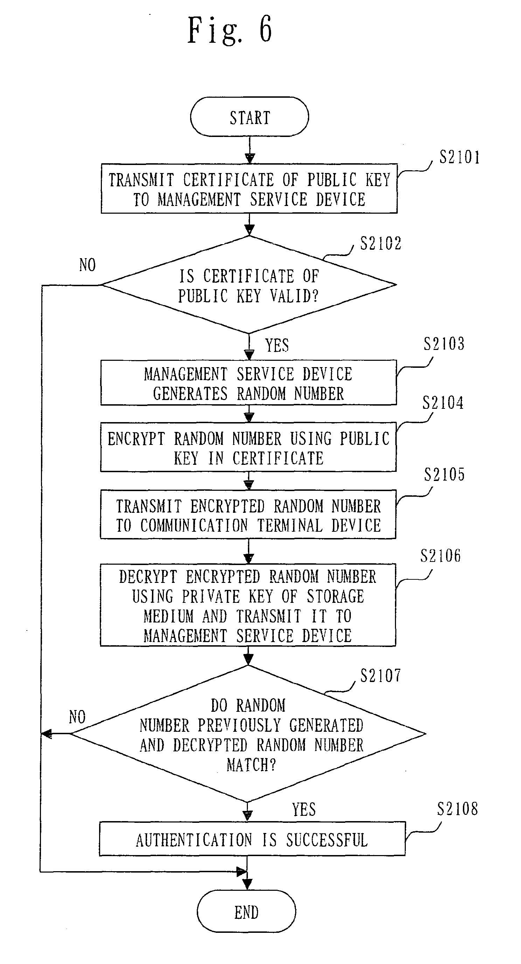

A specific method for the authentication using a PKI scheme is explained by using a flow chart shown in Fig. 6.
The communication terminal device 120 transmits the certificate (certificate includes a public key) for the public key, stored in the storage medium 110 the communication terminal device 120 connects, to the management service device 130 (Step S2101). The management service device 130 verifies validity of the certificate for the public key received from the communication terminal device 120 (Step S2102). Verification of validity is determined based on whether or not an electronic signature of the management service device is applied to the certificate for the public key. When the certificate is not determined valid (in a case of "No" in Step S2102), it is determined as an invalid certificate, and the processing ends. When the certificate is determined valid (in a case of "yes" in Step S2102), the management service device 130 generates a random number (Step S2103), and encrypts the random number using the public key retrieved from the certificate (Step S2104). The management service device 130 transmits the encrypted random number to the communication terminal device 130 (Step S2105). The communication terminal device 120 that has received the encrypted random number from the management service device 130 decrypts the encrypted random number using the secret key stored in the storage medium 110 the communication terminal device 120 connects, and transmits the random number to the management service device 130 (Step S2106). The management service device 130 which has received the decrypted random number from the communication terminal device 120 compares the random number which has been previously generated with the decrypted random number which has been received, and determines whether they match or not (Step S2107). When they match, the storage medium 110 is determined valid, and the authentication is successful (Step S2108).
When they do not match, the storage medium 110 is determined invalid, and it fails in authentication to end the processing.

Next, it is explained a method in which, when a user loses a primary storage medium 110α the user possesses, the communication terminal device 120 in the key management system is able to delete a public key of the lost primary storage medium 110α and to make the lost primary storage medium 110α unavailable by requesting invalidation of the primary storage medium 110α to the management service device 130 through the internet 140, based on the authority of the secondary storage medium 110β, but is unable to invalidate the secondary storage medium 110β according to the lost primary storage medium 110α.

In the management service device 130, the reception unit 1312 receives a request for data processing regarding the first storage medium 110α through the internet 140 as a communication network from the communication terminal device 120 connected to the second storage medium 110β. When the reception unit 1312 receives the request for data processing regarding the first storage medium 110α from the communication terminal device 120, the authentication unit 133 performs authentication of whether or not the second storage medium 110β connected to the communication terminal device 120 is valid.

In the management service device 130, the certificate database 132 stores the public key of the first storage medium 110α and the public key of the second storage medium 110β. When the reception unit 1312 receives a request for invalidation of the first storage medium 110α from the communication terminal device 120, and when the authentication unit 133 authenticates the second storage medium 110β connected to the communication terminal device 120 as a valid storage medium, the certificate database 132 deletes the public key of the first storage medium 110α it stores, but does not delete the public key of the second storage medium 110β.

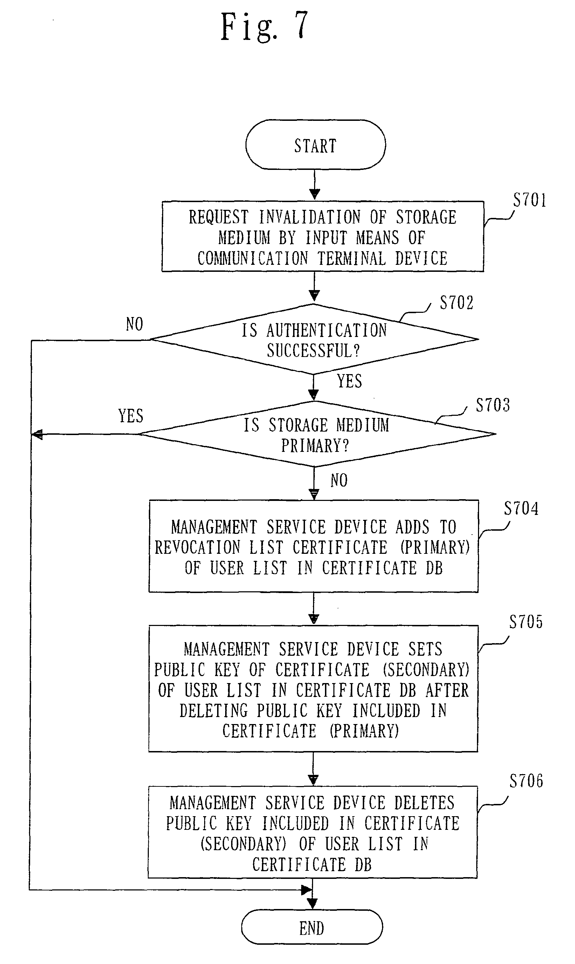

When a user loses a primary storage medium 110α the user regularly uses and when a malicious third person finds it, it may be considered that the malicious third person invalidates the secondary storage medium 110β fraudulently, or registers a new storage medium by using the found primary storage medium 110α (A registration method of a new storage medium is explained below). Therefore, a specific method is explained wherein, when a user loses the primary storage medium 110α, the secondary storage medium 110β can invalidate the primary storage medium 110α, but the primary storage medium 110α cannot invalidate the secondary storage medium 110β, by using a flow chart shown in Fig. 7.

A user or a malicious third person requests invalidation of a storage medium by the input unit 124 of the communication terminal device 120 (Step S701). The communication terminal device 120 transmits the request for invalidation of a storage medium to the management service device 130, and the management service device 130 performs authentication of the storage medium 110 connected to the communication terminal device 120 by using the method shown in Fig. 5, and determines whether the storage medium 110 is valid or not (Step S702). When it is determined not valid (in a case of "No" in Step S702), invalidation cannot be continued, and the processing ends. When it is determined valid (in a case of "yes" in Step S702), the management service device 130 determines whether or not the storage medium authenticated in Step S702 is the primary storage medium 110α (Step S703). When the storage medium authenticated in Step S702 is the primary storage medium 110α (in a case of "yes" in Step S703), the primary storage medium 110α cannot continue invalidation of the secondary storage medium 110β, and the processing ends. When the storage medium used in the authentication in Step S702 is not the primary storage medium 110α (in a case of "No" in Step S703), the management service device 130 adds a certification (primary) of a user possessing the secondary storage medium 110β indicated on the user list in the certificate DB 132 to the revocation list (Step S704), deletes the public key included in the certificate (primary), and then, indicates the public key included in a certificate (secondary) as a public key included in the certificate (primary) (Step S705). After that, deletes the public key included in the certificate (secondary) is deleted (Step S706).

Neat, it is described a method for new registration of a storage medium.
In the management service device 130, the reception unit 1312 receives a request for data processing regarding the first storage medium 110α through the internet 140 as a communication network from the communication terminal device 120 connected to the second storage medium 110β. When the reception unit 1312 receives the request for data processing regarding the first storage medium 110α from the communication terminal device 120, the authentication unit 133 performs authentication of whether or not the second storage medium 110β connected to the communication terminal device 120 is valid.

In the management service device 130, the certificate database 132 stores the public key of the second storage medium 110β. When the reception unit 1312 receives a request for registration of the third storage medium as a new storage medium, and a public key of the third storage medium, and when the authentication unit 133 authenticates the second storage medium 110β connected to the communication terminal device 120 as a valid storage medium, the certificate issuing unit 134 issues a certificate for certifying validity of the public key of the third storage medium received by the reception unit 1312, and the certificate database 132 stores the public key of the third storage medium received by the reception unit 1312 and the certificate for certifying validity of the third storage medium issued by the certificate issuing unit 134.

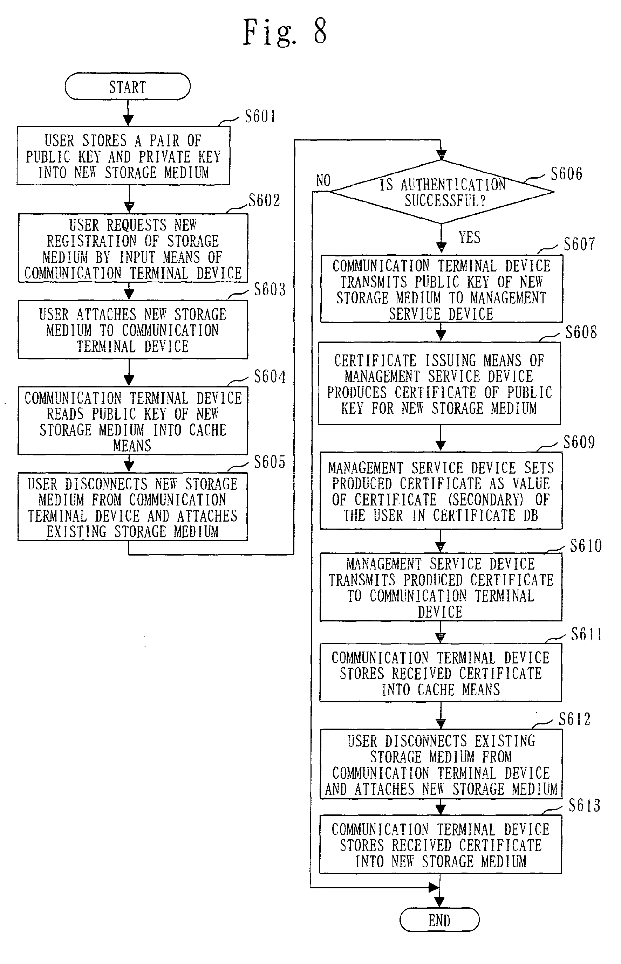

A specific method for registering a newly purchased storage medium to the management service device so that when a user loses the storage medium 110α or the storage medium 110β, the newly purchased storage medium can be used in replacement of the lost storage medium 110α or storage medium 110β is explained, by using a flow chart shown in Fig. 8. In the following explanation, the primary storage medium 110α is lost, and a newly purchased storage medium is registered as a storage medium 110 γ, by using a flow chart shown in Fig. 8.

A user stores a generated public key and private key in the storage medium 110 γ (Step S601). A public key and a private key can be generated by using a PC of a user, etc., for example. The user inputs a request for new registration of the storage medium 110 γ by the input unit 124 of the communication terminal device 120 (Step S602), and attaches the storage medium 110 γ to the communication terminal device 120 (Step S603). The communication terminal device 120 reads the public key stored in the storage medium 110 γ into the memory unit 123 (Step S604). The user detaches the storage medium 110 γ from the communication terminal device 120 and attaches the storage medium 110β to the communication terminal device 120 (Step S605). The management service device 130 performs authentication by using the method shown in Fig. 5, and determines whether or not the authentication is successful (Step S606). When it is not determined successful (in a case of "No" in Step S606), the registration of the storage medium 110 γ cannot be continued, and the processing ends. When it is determined successful (in a case of "yes" in Step S606), the communication terminal device 120 transmits the public key of the storage medium 110 γ stored in the memory unit 123 to the management service device 130 (Step S607). The certificate issuing unit 134 of the management service device 130 produces a certificate for the public key of the storage medium 110 γ (Step S608). The management service device 130 stores the certificate for the public key of the storage medium 110 γ produced by the certificate issuing unit 134 as a certificate (secondary) in the user list in the certificate DB 132 (Step S609). The management service device 130 transmits the certificate for the public key of the storage medium 110 γ produced by the certificate issuing unit 134 to the communication terminal device 120 (Step S610). The communication terminal device 120 stores the certificate received from the management service device 130 in the memory unit 123 (Step S611). The user detaches the storage medium 110β from the communication terminal device 120 and attaches the storage medium 110 γ to the communication terminal device 120 (Step S612). The communication terminal device 120 writes the certificate stored in the memory unit 123 into the storage medium 110 γ via the key access unit 1221 (Step S613).

Meantime, the same applies to a case in which the secondary storage medium 110β is lost, not the primary storage medium 110α. Further, invalidation of a storage medium and registration of a new storage medium can be performed at the same time, which are performed separately in the above explanation. In addition, as for the order for performing invalidation of a storage medium and registration of a new storage medium, either can be performed first.

In the present embodiment, in a case in which the first storage medium 110α is lost, it is possible for the management service device 130 to receive a request for invalidation of the first storage medium 110α through the internet 140 as a communication network from the communication terminal device 120 connected to the second storage medium 110β, to perform authentication of the second storage medium 110β connected to the communication terminal device 120, and when validity of the second storage medium 110β is confirmed, to invalidate the first storage medium 110α by deleting the public key of the first storage medium 110α from the certificate database 132 based on the authority of the second storage medium 110β. Thus, it is possible to perform invalidation of a lost storage medium through the internet 140 as a communication network.

In the present embodiment, in a case in which the first storage medium 110α is lost, it is possible to make the management service device 130 receive a request for invalidation of the first storage medium 110α through the internet 140 as a communication network from the communication terminal device 120 connected to the second storage medium 110β, perform authentication of the second storage medium 110β connected to the communication terminal device 120, and when validity of the second storage medium 110β is confirmed, be able to invalidate the first storage medium 110α by deleting the public key of the first storage medium 110α from the certificate database 132 based on the authority of the second storage medium 110β, but be unable to invalidate the second storage medium 110β based on the authority of the first storage medium 110α. Thus, it is possible to prevent fraudulent invalidation of a second storage medium 110β or registration of a new storage medium by a malicious third person who has found the lost storage medium 110α.

In the present embodiment, it is possible for the management service device 130 to receive a request for registration of the third storage medium γ and the public key of the third storage medium γ through the internet 140 as a communication network from the communication terminal device 120 connected to the second storage medium 110β, to perform authentication of the second storage medium 110β connected to the communication terminal device 120, and when the second storage medium 110β is confirmed as a valid storage medium, to issue the certificate for certifying validity of the public key of the third storage medium γ based on the authority of the second storage medium 1 10β, and to store the public key of the third storage medium γ and the certification for certifying validity of the public key of the third storage medium γ issued by the certificate issuing unit. Thus, it is possible to perform new registration of the third storage medium γ through the internet 140 as a communication network.

In the present embodiment, it is possible for the management service device 130 to register the certificate database 132 for storing the public key of the first storage medium 110α, the certificate for certifying validity of the public key of the first storage medium 110α, the public key of the second storage medium 110β, and the certificate for certifying validity of the public key of the second storage medium 110β, the certificate for certifying validity of the public key of the first storage medium 110α with the public key of the first storage medium 110α, and the certificate for certifying validity of the public key of the second storage medium 110β with the public key of the second storage medium 110β, as a pair. Thus, it is possible to manage two storage media possessed by one user collectively.

In the present embodiment, a user possesses two storage media, and by performing user authentication by a public key and a private key of either of two storage media, it is possible to perform reissue processing of a storage medium online in a case of losing or being stolen a storage medium. Further, by performing invalidation of a storage medium which has been lost or stolen, it is possible to prevent a third person from using services by using the lost storage medium fraudulently. In a case in which invalidation of a primary storage medium and registration of a new storage medium can be performed by using a secondary storage medium, but conversely, invalidation of the secondary storage medium and registration of a new storage medium cannot be performed by using the primary storage medium, it is possible to prevent invalidation of the secondary storage medium and registration of a new storage medium to be performed by a third person who has fraudulently obtained the primary storage medium.

Embodiment 2.
In the second embodiment described below, it is explained an embodiment wherein data stored in a storage medium is received via the internet and is stored as backup data in a backup service device, and when the storage medium is lost, the backup data is transmitted to and restored into another storage medium.

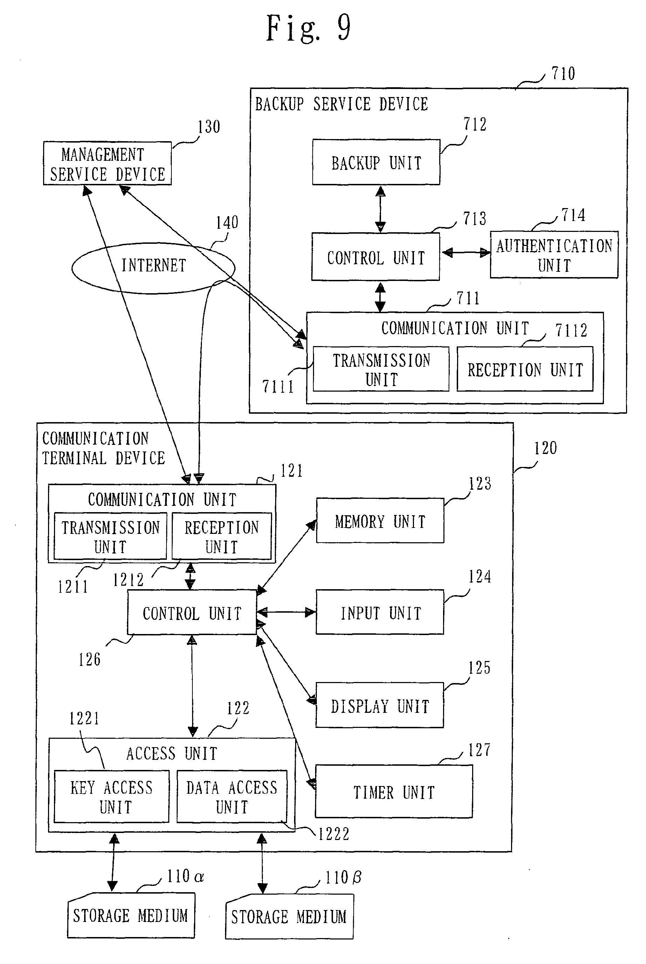

Fig. 9 is a diagram describing a structure of a key management system according to the second embodiment.
The structure of the key management system according to the second embodiment includes a backup service device 710 to receive data stored in the storage medium 110 through the internet 140 and store the data as backup data, in addition to the structure of the key management system according to the first embodiment.

The backup service device 710 consists of a communication unit 711 for performing communication via the internet 140, a backup unit 712 for storing data stored in the storage medium 110 transmitted from the communication terminal device 120, a control unit 713 for controlling them, and an authentication unit 714 for performing authentication of the storage medium 110 storing a public key by using a certificate for the public key.

The communication unit 711 consists of a transmission unit 7111 for transmitting data to the communication terminal device 120 or the management service device 130, and a reception unit 7112 for receiving data from the communication terminal device 120 or the management service device 130.

The communication terminal device 120 includes a timer unit 127 for running a designated program at a specified time in addition to the components in the first embodiment.
Further, it includes a backup program not shown in the diagram. The backup program has a function to transmit the data inside the storage medium to the backup service device 710. The backup program may be incorporated in the communication terminal device 120 from the beginning, or may be stored in the storage medium 110α.

Next, it is explained a method for backing up the data stored in the storage medium 110 to the backup service device 710 via the internet 140, and a method for restoring the backup data stored in the backup service device 710 into the storage medium 110 connected to the communication terminal device via the internet 140.

In the backup service device 710, the reception unit 7112 receives data stored in the first storage medium 110α and a request for storing the data as backup data via the internet 140 as a communication network from the communication terminal device 120 connected to the first storage medium 110α. Further, the reception unit 7112 receives a request for transmitting backup data via the internet 140 as a communication network from the communication terminal device 120 connected to the second storage medium 110β. When the reception unit 7112 receives the request for storing the data stored in the first storage medium 110α as backup data from the communication terminal device 120 connected to the first storage medium 110α, the authentication unit 714 performs authentication of whether or not the first storage medium 110α connected to the communication terminal device 120 is valid. When the reception unit 7112 receives the request for transmitting backup data from the communication terminal device 120 connected to the second storage medium 110β, the authentication unit 714 performs authentication of whether or not the second storage medium 110β connected to the communication terminal device 120 is valid. When the authentication unit 714 authenticates the first storage medium 110α connected to the communication terminal device 120 as a valid storage medium, the backup unit 712 stores the data stored in the first storage medium 110α received by the reception unit 7112 as backup data. When the authentication unit 714 authenticates the second storage medium 110β connected to the communication terminal device 120 as a valid storage medium, the transmission unit 7111 transmits the backup data stored in the backup unit 712 to the communication terminal device 120 connected to the second storage medium 110β via the internet 140 as a communication network.

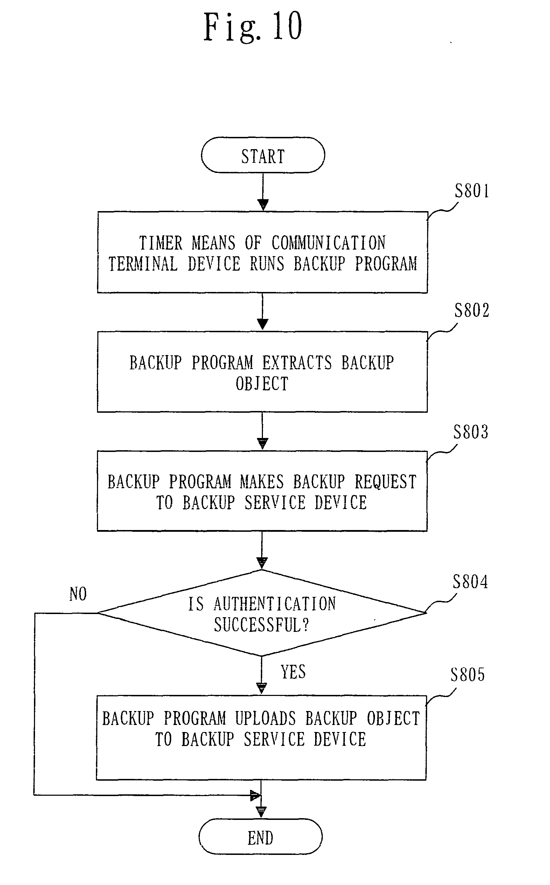

A specific method for performing backup of the data in the storage medium 110α is explained by using a flow chart shown in Fig. 10.
The timer unit 127 of the communication terminal device 120 runs the backup program (Step S801). The backup program run by the timer unit 127 reads out data as object of backup from the storage medium 110α (Step S802). The data as object of backup may be only the difference from the backup of the last time, for example, and may be whole the data. The backup program run by the timer unit 127 transmits a request for backup to the backup service device 710 (Step S803). The backup service device 710 that has received the request for backup performs authentication of the storage medium 110α through the communication terminal device 120 (a method for authentication is described below), and determines whether or not the authentication is successful (Step S804). When it is not determined successful (in a case of "No" in Step S804), the backup cannot be continued, and the processing ends. When it is determined successful (in a case of "yes" in Step S804), the backup program run by the timer unit 127 transmits the data as object of backup to the backup service device 710 (Step S805).

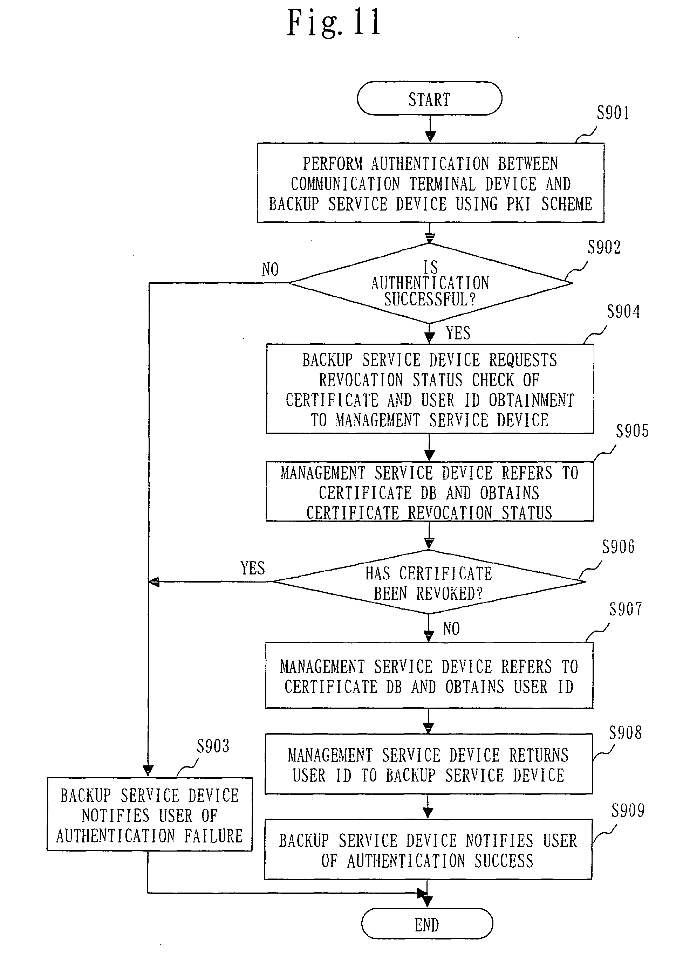

Next, it is explained a specific method for authentication performed by the backup service device 710 by using a flow chart shown in Fig. 11.
The backup service device 710 performs authentication of the storage medium 110 connected to the communication terminal device 120 by using a PKI (Public Key Infrastructure) scheme employing a public key and a private key stored in the storage medium 110 (Step S901), and determines whether the authentication is successful or not (Step S902). When it is not determined successful (in a case of "No" in Step S902), it is reported to the user that it fails in authentication, and the processing ends (Step S903). When it is determined successful (in a case of "yes" in Step S902), the backup service device 710 requests the management service device 130 to check revocation status of a certificate for the public key stored in the storage medium 110, and to obtain a user ID (Step S904). The management service device 130 refers to the revocation list in the certificate DB 132, obtains revocation status of the certificate (Step S905), and determines whether or not the certificate has been revoked (Step S906). When the certificate has been revoked, it is reported to the user, and the processing ends (Step S903). When it has not been revoked, the management service device 130 refers to the user list in the certificate DB 132, and obtains a user ID of the user corresponding to the certificate (Step S907). The management service device 130 transmits the user ID to the backup service device 710 (Step S908). The backup service device 710 reports to the user authentication success (Step S909).

A method for authenticating a storage medium using a PKI scheme performed in the specific method for authentication, which is performed by the backup service device 710 as shown in Fig. 11, is the same as the method shown in Fig. 6.

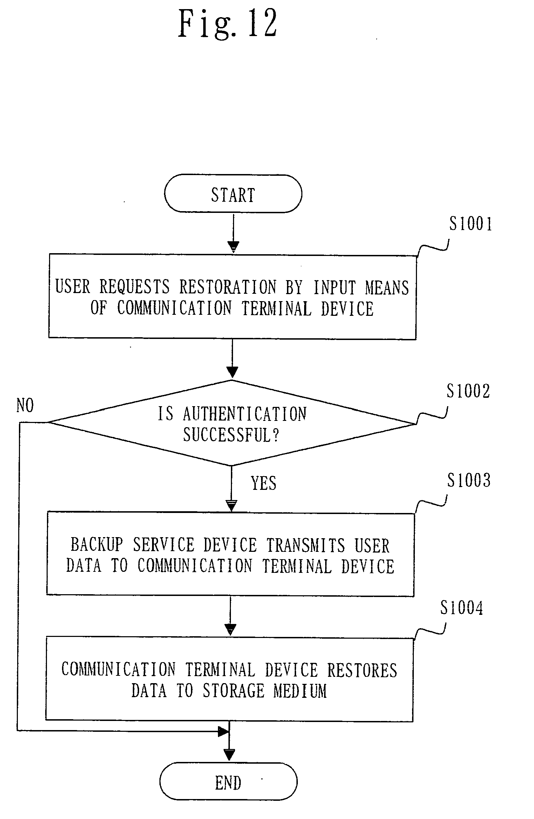

A specific method for restoring data backed up to the backup service device 710 to the storage medium 110β when the storage medium 110α is lost and becomes unavailable is explained by using a flow chart shown in Fig. 12.

A user requests a restoration of the backup data to the backup service device 710 by the input unit 124 of the communication terminal device 120 (Step S1001). The backup service device 10 performs authentication of the storage medium 110β connected to the communication terminal device 120 by using the method shown in Fig. 11, and determines whether or not the authentication is successful (Step S1002). When the authentication is not determined successful (in a case of "No" in Step S1002), it is reported to the user, and the processing ends. When the authentication is determined successful (in a case of "yes" in Step S1002), the backup service device 710 transmits the backup data to the communication terminal device 120 (Step S1003). The communication terminal device 120 writes the data into the communication terminal device 120 (Step S1004).

In the present embodiment, it is possible for the backup service device 710 to receive a request for backup of the data stored in the first storage medium 110α via the internet 140 as a communication network from the communication terminal device 120 connected to the first storage medium 110α, to perform authentication of the first storage medium 110α connected to the communication terminal device 120, and when the first storage medium 110α is confirmed as a valid storage medium, to store the data stored in the first storage medium 110α received from the communication terminal device 120.
Thus, the data stored in the storage medium 110α can be backed up to the backup service device 710.

In the present embodiment, it is possible for the backup service device 710 to receive a request for transmission of backup data via the internet 140 as a communication network from the communication terminal device 120 connected to the second storage medium 110β, and when the request for transmission of backup data is received from the communication terminal device 120, to perform authentication of the second storage medium 110β connected to the communication terminal device 120, and when the second storage medium 110β is confirmed as a valid storage medium, to transmit the backup data stored in the backup service device 710 to the communication terminal device 120. Thus, the backup data in the backup service device 710 can be restored to the storage medium 110β.

In the present embodiment, by backing up data to the backup service device 710, it is possible to restore the data to the second storage medium 110β when the first storage medium 110α is lost. Since at the time of restoration, authentication is performed using a PKI scheme employing a public key and a private key of the second storage medium 110β with the management service device 130, it is possible to strengthen the level of authentication in comparison to a case of performing authentication by a password.

Embodiment 3.
In the second embodiment, a public key stored in a storage medium and its certificate are transmitted to the backup service device when performing authentication of the storage medium using a PKI scheme. Contrary, in the following third embodiment, it is explained an embodiment wherein the backup service device originally stores the public key, which makes verification of validity of the certificate for the public key unnecessary as a result.

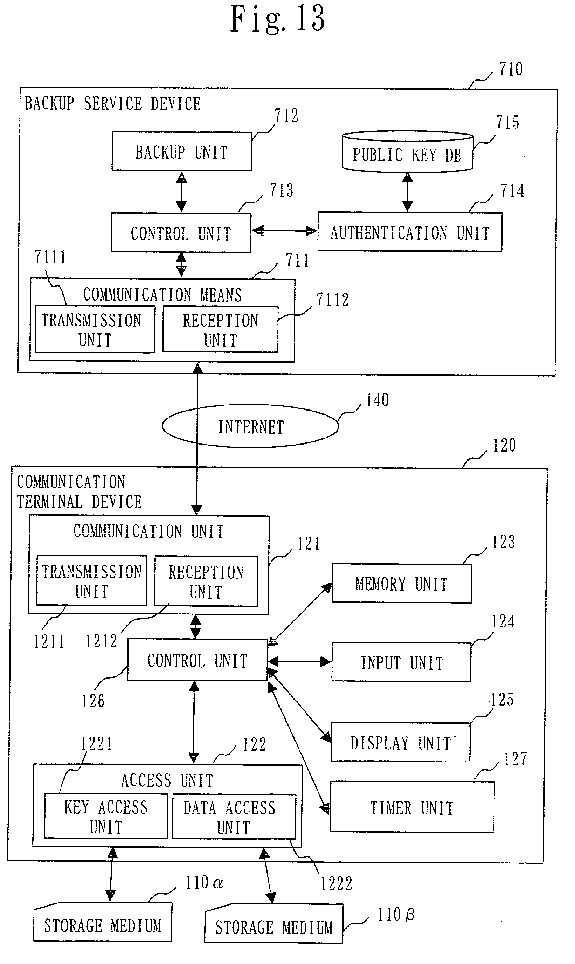

Fig. 13 is a diagram describing a structure of a key management system according to the third embodiment.
The structure of the key management system according to the third embodiment is the same as the structure of the key management system according to the second embodiment. The management service device 130 also exists in reality, but not shown in the diagram.

The structure of the backup service device 710 according to the third embodiment further includes a public key DB 715 for storing a public key stored in the storage medium 110, and an authentication unit for authenticating the storage media 110 by using the public key in addition to the structure of the backup service device 710 according to the second embodiment.

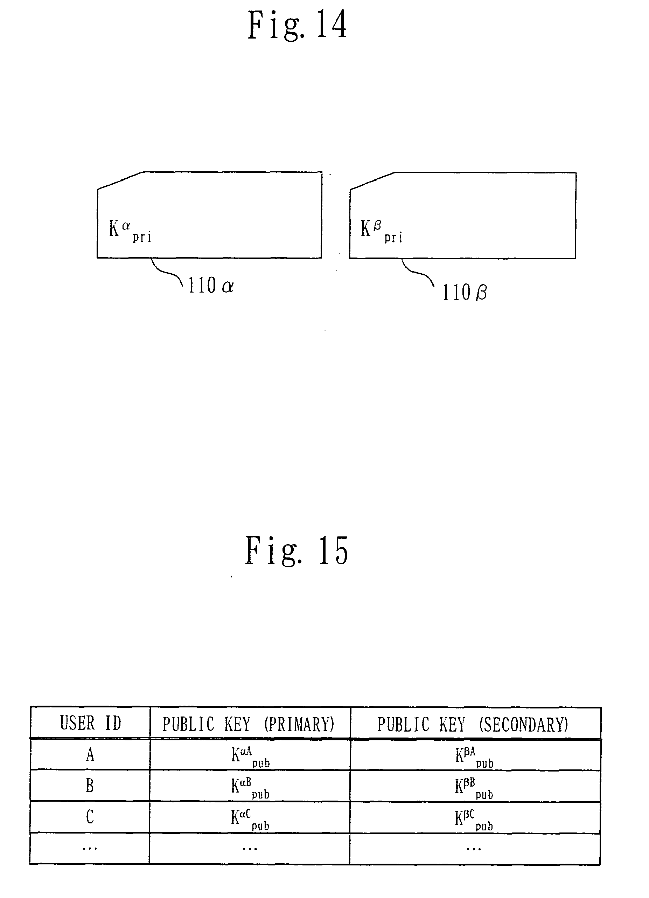

The storage medium 110α and the storage medium 110β each stores only a unique private key as shown in Fig. 14.

The public key DB 715 stores a user list showing correspondence between a user ID and a public key. Fig. 15 describes an example of the user list in the public key DB 715. The user ID is an ID to uniquely identify a user in the whole system. A public key (primary) is a public key of the primary storage medium 110α possessed by the user, whereas a public key (secondary) is a public key of the secondary storage medium 110β possessed by the user. In Fig. 15, K^{αA}_{pub} describes a public key of a primary storage medium of a user A, and K^{βA}_{pub} describes a public key of a secondary storage medium of the user A, respectively. The same is equally true of users B and C.

Next, it is explained a method for backup and restoration according to the present embodiment.
A method for backup of data stored in the storage media 110 and restoration of backup data to the storage media 110 are, except for authentication performed therein, the same as in the second embodiment.

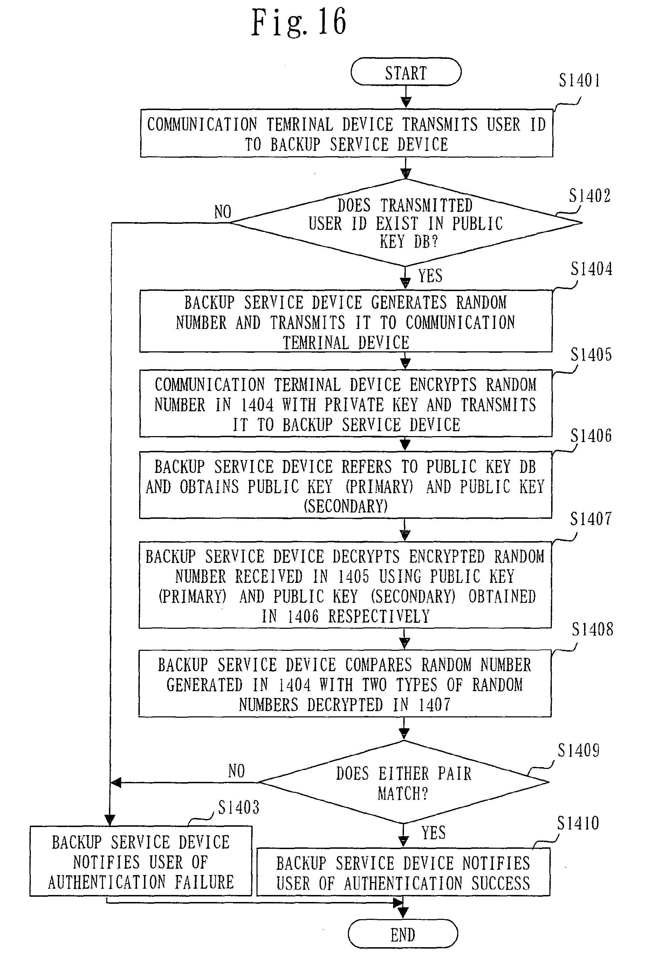

Authentication method according to the present embodiment is explained by using a flow chart shown in Fig. 16.
The communication terminal device 120 transmits the user ID of the user possessing the storage medium 110 to the backup service device 710 (Step S 1410). The backup service device 710 confirms whether or not the user ID received from the communication terminal device 120 exists in the user list in the public key DB 715. When it does not exist (in a case of "No" in Step S 1402), the backup service device 710 reports to the user that it fails in authentication, and the processing ends (Step S 1403). When it exists (in a case of "yes" in Step S 1402), the backup service device 710 generates a random number and transmits it to the communication terminal device 120 (Step S 1404). The communication terminal device 120 encrypts the random number received from the backup service device 710 by using a private key stored in the storage media 110, and transmits it to the backup service device 710 (Step S1405). The backup service device 710 obtains a public key (primary) and a public key (secondary) corresponding to the user ID received in Step S1402 from the public key DB 715 (Step S1406). The backup service device 710 decrypts the encrypted random number received from the communication terminal device 120 by using the obtained public key (primary) and the public key (secondary) respectively (Step S1407). The backup service device compares the random number generated in Step S 1404 with each of two decrypted random numbers (Step S 1408), and determines whether or not the generated random number and each of two decrypted random numbers match (Step S 1409). When the generated random number and each of two decrypted random numbers do not match (in a case of "No" in Step S 1409), the backup service device reports to the user that it fails in authentication, and the processing ends (Step S1403). When the generated random number and either of two decrypted random numbers match (in a case of "yes" in Step S 1409), the backup service device 710 reports to the user that the authentication is successful (Step S1410).

According to the present embodiment, the backup service device 710 stores the public key of the storage medium 110 possessed by a user so that verification of a certificate for the pubic key by the management service device 130 is unnecessary at the time of authenticating the storage medium 110.

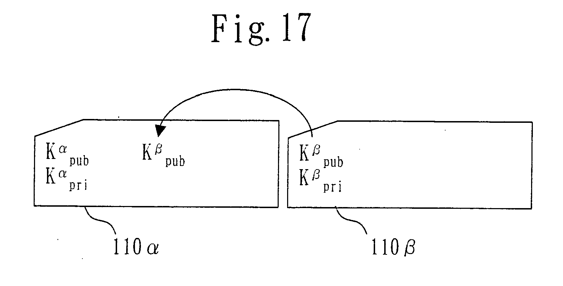

Embodiment 4.
In the foregoing second and third embodiments, data stored in a storage medium is backed up to the backup service device in plaintext. In the following fourth embodiment, as shown in Fig. 17, it is explained an embodiment wherein a public key stored in a secondary storage medium β is written into a primary storage medium α, data stored in a storage medium is encrypted by using the public key written into a primary storage medium α and backed up to the backup service device via a network, and then backup data is decrypted and restored to another storage medium.

A structure of the key management system according to the fourth embodiment is the same as the structure of the key management system according to the second embodiment or the third embodiment.

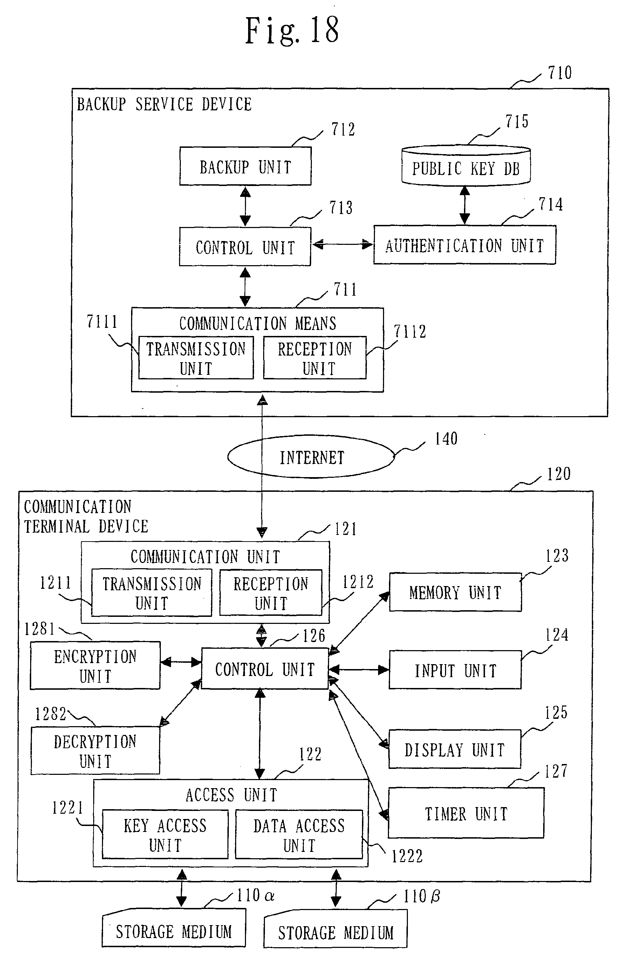

The communication terminal device 120 includes, as shown in Fig. 18, an encryption unit 1281 for encrypting data as object of backup by using a public key of the second storage medium stored in the first storage medium, and a decryption unit for decrypting backup data by using a private key stored in the second storage medium, in addition to the structure according to the second embodiment.

Next, it is explained a method for encrypting and backing up data stored in a storage medium according to the present embodiment.

In the communication terminal device 120, the key access unit 1221 connects to either of the first storage medium 110α storing the first public key, the first private key corresponding to the first public key and data, and the second storage medium 110β storing the second public key, the second private key corresponding to the second public key and data, performs readout of the first public key and the first private key from the first storage medium 110α and writing of the first public key and the first private key into the first storage medium 110α, and performs readout of the second public key and the second private key from the second storage medium 110β, and writing of the second public key and the second private key to the second storage medium 110β. The data access unit 1222 performs readout of data from the first storage medium 110α, writing of data to the first storage medium 110α, readout of data from the second storage medium 110β and writing of data to the second storage medium 110β. The transmission unit 1211 transmits data, and the reception unit 1212 receives data.

The communication terminal device 120 further includes an encryption unit 1281 for encrypting data using the second public key. The first storage medium 110α stores the second public key of the second storage medium 110β, the key access unit 1221 reads out the second public key from the first storage medium 110α, the data access unit 1222 reads out data from the first storage medium 110α, the encryption unit 1281 encrypts the data read out by the data access unit 1222 from the first storage medium 110α by using the second public key, and the transmission unit 1211 transmits the data encrypted by the encryption unit 1281.

The communication terminal device 120, further includes a decryption unit 1282 for decrypting the encrypted data by using the second private key. The reception unit 1212 receives the encrypted data, the key access unit 1221 reads out the second private key from the second storage medium 110β, the decryption unit 1282 decrypts the encrypted data received by the reception unit 1212 by using the second private key, and the data access unit 1222 writes the data decrypted by the decryption unit 1282 into the second storage medium 110β.

The reception unit 7112 in the backup service device 710 receives the data stored in the first storage medium 110α and a request for storing the data as backup data through the internet 140 as a communication network from the communication terminal device 120 connected to the first storage medium 110α. When the reception unit 7112 receives the request for storing the data stored in the first storage medium 110α as backup data from the communication terminal device 120 connected to the first storage medium 110α, the authentication unit 714 performs authentication of whether or not the first storage medium 110α connected to the communication terminal device 120 is valid. When the authentication unit 714 authenticates the first storage medium 110α connected to the communication terminal device 120 as a valid storage medium, the backup unit 712 stores the data stored in the first storage medium 110α received by the reception unit 7112 as backup data.

In this case, the backup data is encrypted by using the public key of the second storage medium 110β, by the communication terminal device 120 connected to the first storage medium 110α.

The reception unit 7112 in the backup service device 710 receives a request for transmitting the backup data from the communication terminal device 120 connected to the second storage medium 110β via the internet 140 as a communication network. When the reception unit 7112 receives the request for transmitting the backup data from the communication terminal device 120 connected to the second storage medium 110β, the authentication unit 714 performs authentication of whether or not the second storage medium 110β connected to the communication terminal device 120 is valid. When the authentication unit 714 authenticates the second storage medium 110β connected to the communication terminal device 120 as a valid storage medium, the transmission unit 7111 transmits the backup data stored in the backup unit 712 to the communication terminal device 120 connected to the second storage medium 110β via the internet 140 as a communication network.

When the backup data received from the backup service device 710 is encrypted by using the public key of the second storage medium 110β, the communication terminal device 120 decrypts the backup data by using the private key of the second storage medium 110β.

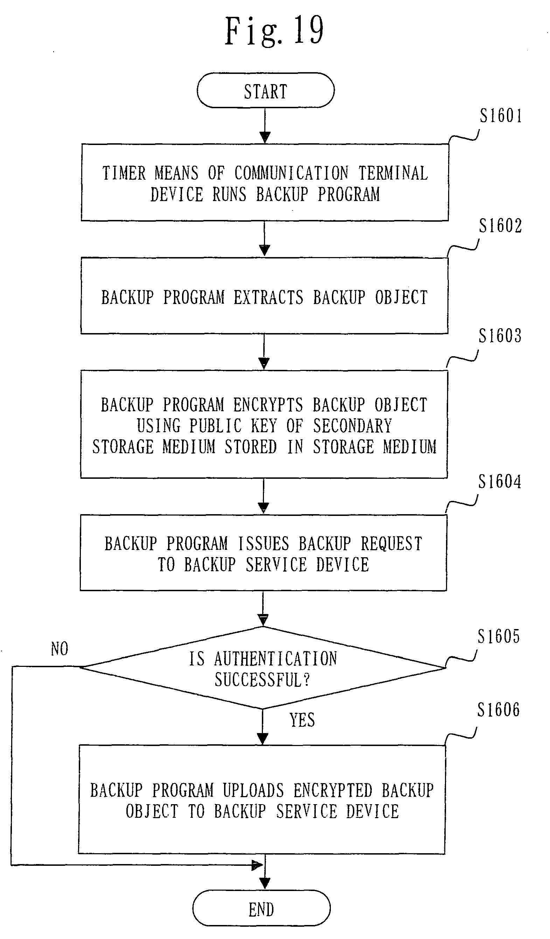

A specific method for encrypting data stored in the storage media 110 and backing up the data to the backup service device 710 is explained by using a flow chart as shown in Fig. 19.
The timer unit 127 of the communication terminal device 120 runs the backup program (Step S1601). The backup program reads out data as object of backup in the storage medium 110α (Step S1602). The backup program encrypts the data as object of backup by using the public key of the storage medium 110β stored in the storage medium 110α (Step S1603). The backup program transmits a request for backup to the backup service device 710 via the internet 140 (Step S1604). The backup service device 710 received the request for backup from the communication terminal device 120 performs authentication of the storage medium 110α connected to the communication terminal device by using the method described in Fig. 11 or Fig. 16, and determines whether the authentication is successful or not (Step S1605). When it is not determined successful (in a case of "No" in Step S1605), the backup cannot be continued, and the processing ends. When it is determined successful (in a case of "yes" in Step S1605), the backup program transmits the encrypted backup data to the backup service device 710 via the internet 140 (Step S1606).

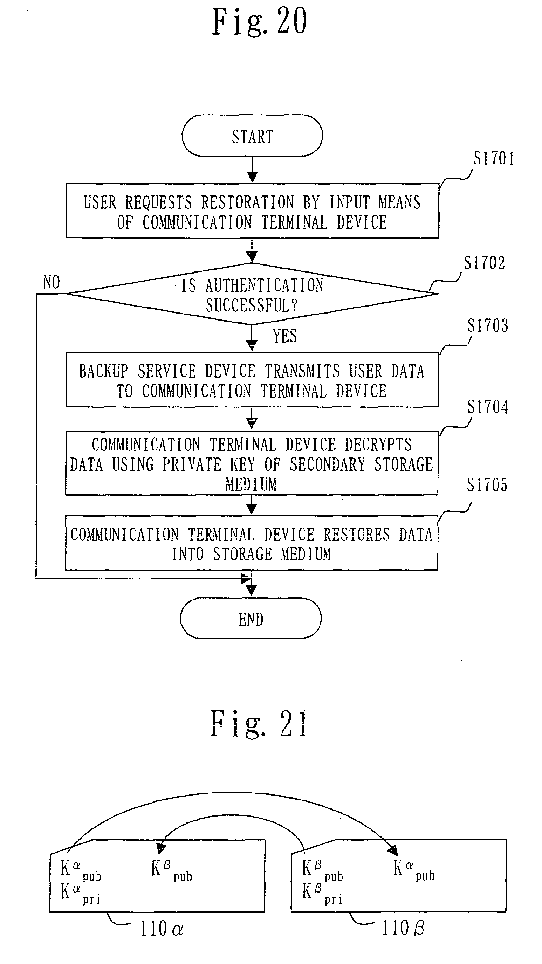

Next, it is explained a method for decrypting backup data and restoring it to the storage medium.
It is explained, by using a flow chart shown in Fig. 20, a specific method for decrypting the encrypted backup data in the backup service device 710 and restoring it to the storage medium 110β in a case when the storage medium 110α is lost and so on, and becomes unavailable.
A user inputs a request for restoring the backup data by the input unit 124 of the communication terminal device 120 (Step S1701). The backup service device 710 performs authentication of the storage medium 110β connected to the communication terminal device 120 by using the method shown in Fig. 11 or Fig. 16, and determines whether the authentication is successful or not (Step S 1702). When it is not determined successful (in a case of "No" in Step S 1702), the restoration cannot be continued, and the processing ends. When it is determined successful (in a case of "yes" in Step S1702), the backup service device 710 transmits the backup data to the communication terminal device 120 via the internet 140 (Step S1703). The communication terminal device 120 received the backup data from the backup service device 710 decrypts the backup data by using the private key of the storage medium 110β (Step S1704). The communication terminal device 120 restores the decrypted data to the storage medium 110β (Step S 1705).

In the fourth embodiment, data is encrypted by using the public key of the storage medium 110β at the time of backup. However, instead of performing encryption by using the public key, it is also possible to use a method for generating a temporary common key unique to backup, encrypting data to be backed up by using the common key, and further encrypting the common key with the public key of the storage medium 110β. In this case, at the time of restoring backup data, the temporary common key is decrypted by using the private key of the storage medium 110β, and the backup data is decrypted by using the decrypted common key and written into the storage medium 110β.

According to the present embodiment, the communication terminal device 120 connects to either of the first storage medium 110α storing the first public key, the first private key corresponding to the first public key and data, and the second storage medium 110β storing the second public key, the second private key corresponding to the second public key and data, and it is made possible that the key access unit 1221 performs readout of the first public key and the first private key from the first storage medium 110α and writing of the first public key and the first private key into the first storage medium 110α, and performs readout of the second public key and the second private key from the second storage medium 110β, and writing of the second public key and the second private key to the second storage medium 110β, the data access unit 1222 performs readout of data from the first storage medium 110α and writing data to the first storage medium 110α, as well as readout of data from the second storage medium 110β and writing of data to the second storage medium 110β, the transmission unit 1211 transmits data, and the reception unit receives data.

According to the present embodiment, the communication terminal device 120 further includes the encryption unit 1281 for encrypting data by using the second public key, and the first storage medium 110α stores the second public key of the second storage medium 110β, whereby it is made possible that the key access unit 1221 reads out the second public key from the first storage medium 110α, the data access unit 1222 reads out data from the first storage medium 110α, the encryption unit 1281 encrypts the data read out by the data access unit 1222 from the first storage medium 110α by using the second public key, and the transmission unit 1211 transmits the data encrypted by the encryption unit 1281.

According to the present embodiment, the communication terminal device further includes the decryption unit 1282 for decrypting the encrypted data by using the second private key, whereby it is made possible that the reception unit 1212 receives the encrypted data, the key access unit 1221 reads out the second private key from the second storage medium 110β, the decryption unit 1282 decrypts the encrypted data received by the reception unit 1212 by using the second private key, and the data access unit 1222 writes the data decrypted by the decryption unit 1282 into the second storage medium 110β.

According to the present embodiment, it is possible for the communication terminal device 120 to read out the second public key from the first storage medium 110α it connects, to read out data from the first storage medium 110α it connects, to encrypt the data read out from the first storage medium 110α by using the read-out second public key, and to transmit the encrypted data to the backup service device for storing backup data. Thus, it is possible to prevent the backup data from being referred to fraudulently, and further to easily decrypt the backup data by using the second private key stored in the second storage medium 110β, at the time of restoring the backup data to the second storage medium 110β.

According to the present embodiment, it is possible for the communication terminal device 120 to receive backup data of the first storage medium 110α encrypted with the second public key stored in the second storage medium 110β from the backup service device 710 storing backup data, to read out the second secret key from the second storage medium 110β it connects, to decrypt the received backup data by using the read-out second secret key of the second storage medium 110β, and to store the decrypted backup data of the first storage medium 110α in the second storage medium 110β it connects. Thus, when the first storage medium 110α is lost, it is possible to easily restore the lost data by decrypting encrypted backup data stored in the backup service device 710, and by storing it in the second storage medium 110β.

According to the present embodiment, data is encrypted with the public key of the storage medium 110β and backed up to the backup service device 710, so that the backed up data cannot be decrypted other than in the storage medium β storing the secret key of the storage medium β. Therefore, it is possible to prevent data from being fraudulently referred to in the internet 140, the backup service device 710, etc.

Embodiment 5.
In the fourth embodiment, data stored in a storage medium is encrypted and backed up. In the following fifth embodiment, as shown in Fig. 21, it is explained an embodiment wherein, after a public key stored in a secondary storage medium is written into a primary storage medium, and a public key stored in the primary storage medium is written into the secondary storage medium, data stored in a storage medium is encrypted and applied an electronic signature, backed up to the backup service device via a network, and then, restored to another storage medium after verifying a signature on backup data and decrypting the data.

A structure of a key management system according to the fifth embodiment is the same as the structure of the key management system according to the second embodiment or the third embodiment.

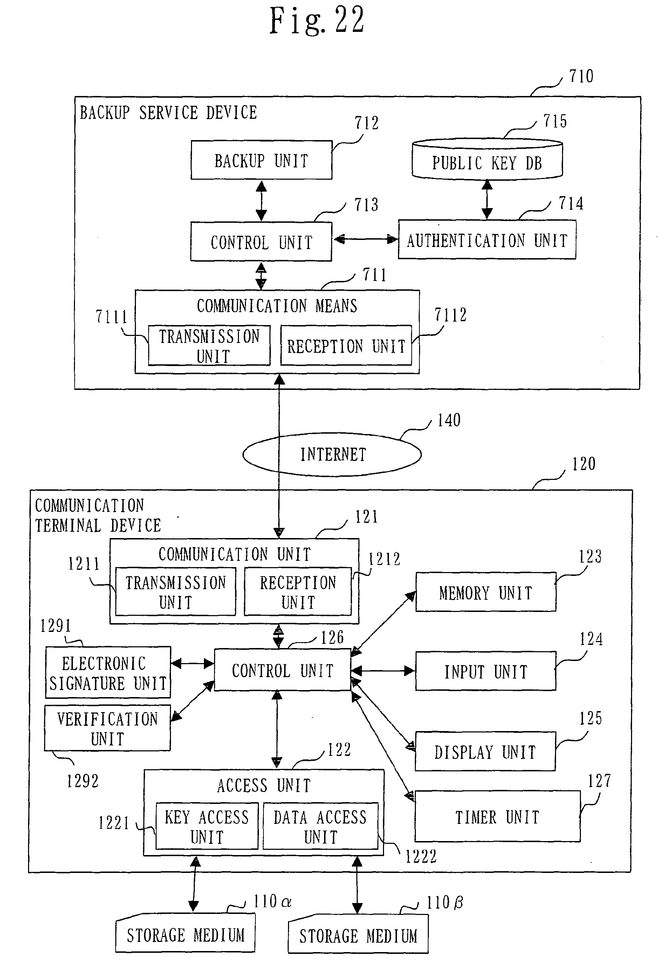

The communication terminal device 120 includes a electronic signature unit 1291 for applying an electronic signature to data as object of backup using a private key stored in the first storage medium 110α, and a verification unit 1291 for verifying an electronic signature on backup data using a public key stored in the memory unit 123, in addition to the structure in the second embodiment, as shown in Fig. 22.

In the communication terminal device 120, the key access unit 1221 connects to either of the first storage medium 110α storing the first public key, the first private key corresponding to the first public key and data, and the second storage medium 110β storing the second public key, the second private key corresponding to the second public key and data, performs readout of the first public key and the first private key from the first storage medium 110α and writing of the first public key and the first private key into the first storage medium 110α, and performs readout of the second public key and the second private key from the second storage medium 110β, and writing of the second public key and the second private key to the second storage medium 110β. The data access unit 1222 performs readout of data from the first storage medium 110α, writing of data to the first storage medium 110α, readout of data from the second storage medium 110β and writing of data to the second storage medium 110β. The transmission unit 1211 transmits data, and the reception unit 1212 receives data.

The communication terminal device 120 further includes the electronic signature unit 1291 for applying an electronic signature to data by using the first private key, wherein the key access unit 1221 reads out the first private key from the first storage medium 110α, the data access unit 1222 reads out data from the first storage medium 110α, the electronic signature unit 1291 applies an electronic signature to the data read out by the data access unit 1222 from the first storage medium 110α by using the first private key, and the transmission unit 1211 transmits the data electronically signed by the electronic signature unit 1291.

The communication terminal device 120, further includes a verification unit 1292 for verifying the electronically signed data using the first public key, wherein the second storage medium 110β stores the first public key of the first storage medium 110α, the reception unit 1212 receives the electronically signed data, the key access unit 1221 reads out the first public key from the second storage medium 110β, and the verification unit 1292 verifies the electronically signed data received by the reception unit 1212 by using the first public key.

Next, it is explained a method for applying an electronic signature to data stored in the storage medium 110 and backing up the data according to the present embodiment.
In the backup service device 710, the reception unit 7112 receives the data stored in the first storage medium 110α and a request for storing the data as backup data through the internet 140 as a communication network from the communication terminal device 120 connected to the first storage medium 110α. When the reception unit 7112 receives the request for storing the data stored in the first storage medium 110α as backup data from the communication terminal device 120 connected to the first storage medium 110α, the authentication unit 714 performs authentication of whether or not the first storage medium 110α connected to the communication terminal device 120 is valid. When the authentication unit 714 authenticates the first storage medium 110α connected to the communication terminal device 120 as a valid storage medium, the backup unit 712 stores the data stored in the first storage medium 110α received by the reception unit 7112 as backup data.

In this case, the backup data is applied an electronic signature by using the private key of the first storage medium 110α, by the communication terminal device 120 connected to the first storage medium 110α.

In the backup service device 710, the reception unit 7112 receives a request for transmitting the backup data from the communication terminal device 120 connected to the second storage medium 110β via the internet 140 as a communication network. When the reception unit 7112 receives the request for transmitting the backup data from the communication terminal device 120 connected to the second storage medium, the authentication unit 714 performs authentication of whether or not the second storage medium 110β connected to the communication terminal device 120 is valid. When the authentication unit 714 authenticates the second storage medium 110β connected to the communication terminal device 120 as a valid storage medium, the transmission unit 7111 transmits the backup data stored in the backup unit 712 to the communication terminal device 120 connected to the second storage medium 110β via the internet 140 as a communication network.

When an electronic signature is applied to the backup data received from the backup service device 710 by using the private key of the first storage medium 110α, it is verified by using the public key of the first storage medium 110α, by the communication terminal device 120.

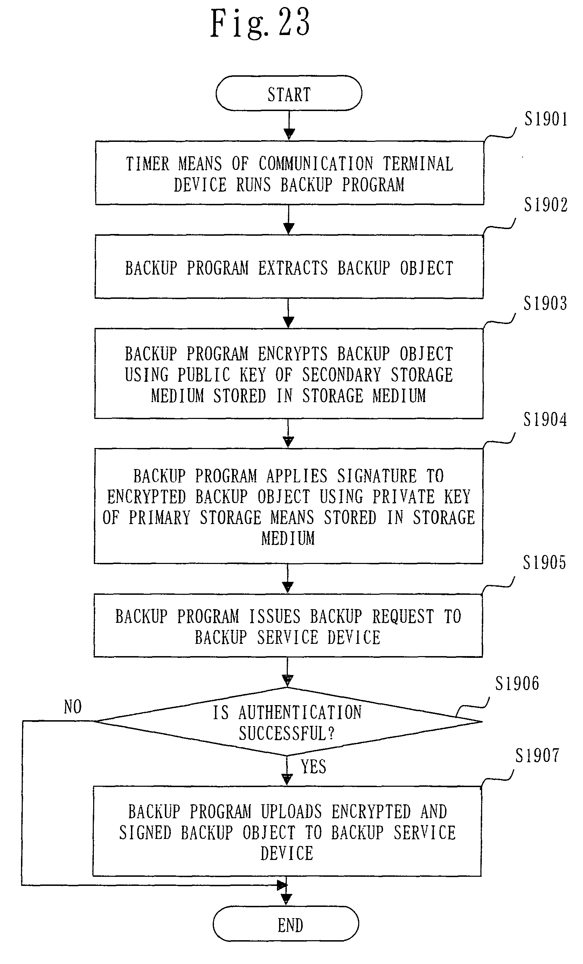

A specific method for applying an electronic signature to and performing encryption of the data stored in the storage media 110, and for backing up the data to the backup service device 710 is explained by using a flow chart shown in Fig. 23.
The timer unit 127 of the communication terminal device 120 runs the backup program (Step S1901). The backup program reads out data as object of backup from the storage medium 110α (Step S1902). The backup program encrypts the data as object of backup by using the public key of the storage medium 110β stored in the storage medium 110α (Step S1903). The backup program applies an electronic signature to the object of backup by using the private key of the storage medium 110α stored in the storage medium 110α (Step S1904). The backup program transmits a request for backup to the backup service device 710 via the internet 140 (Step S 1905). The backup service device 710 performs authentication of the storage medium 110α connected to the communication terminal device 120 by using the method described in Fig. 11 or Fig. 16, and determines whether the authentication is successful or not (Step S 1906). When it is not determined successful (in a case of "No" in Step S1906), the backup cannot be continued, and the processing ends. When it is determined successful (in a case of "yes" in Step S1906), the backup program transmits the encrypted and electronically signed data as object of backup to the backup service device 710 via the internet 140 (Step S 1907).

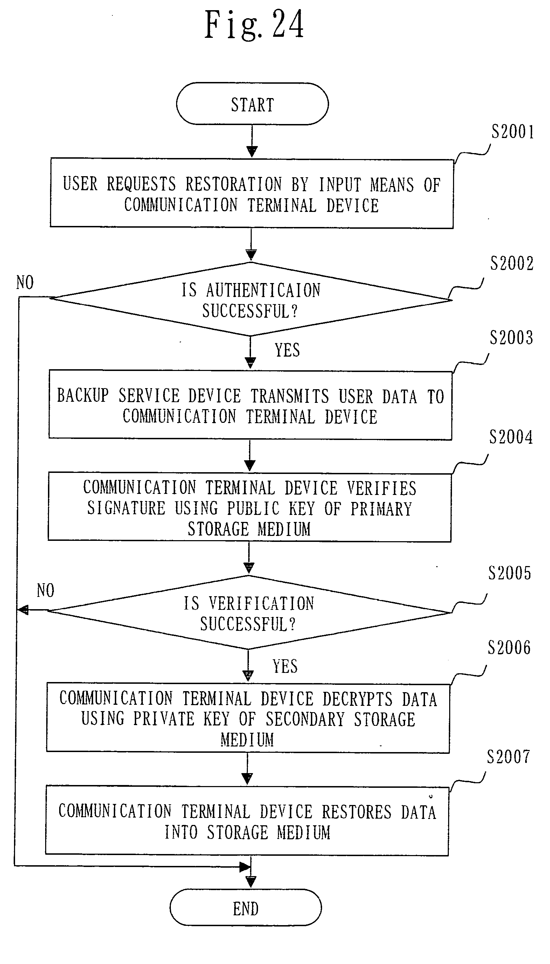

Next, it is explained a method for verifying an electronic signature on the backup data and for restoring the backup data to the storage media 110 according to the present embodiment.
It is explained, by using a flow chart shown in Fig. 24, a specific method for verifying an electronic signature on the backup data whereto encryption is performed and the electronic signature is applied in the backup service device 710, and for decrypting and restoring to the storage medium 110β the backup data, in a case when the storage medium 110α is lost and so on, and becomes unavailable.
A user inputs a request for restoring by the input unit 124 in the communication terminal device 120 (Step S2001). The communication terminal device 120 transmits the request for restoring to the backup service device 710 via the internet 140, and the backup service device 710 performs authentication of the storage medium 110β connected to the communication terminal device 120 by using the method shown in Fig. 11 or Fig. 16, and determines whether the authentication is successful or not (Step S2002). When it is not determined successful (in a case of "No" in Step S2002), the restoration cannot be continued, and the processing ends. When it is determined successful (in a case of "yes" in Step S2002), the backup service device 710 transmits the backup data to the communication terminal device 120 (Step S2003). The communication terminal device 120, which has received the backup data from the backup service device 710, verifies the electronic signature by using the public key of the storage medium 110α (Step S2004), and determines whether the signature is applied validly or not (Step S2005). When it is not determined the signature is validly applied (in a case of "No" in Step S2005) as a result of verification, the backup data is not restored and the processing ends, since the backup data is falsified or invalidly generated data. When it is determined the signature is validly applied (in a case of "yes" in Step S2005), the communication terminal device 120 decrypts the backup data using the private key of the storage medium 110β (Step S2006). The communication terminal device 120 writes the decrypted backup data into the storage medium 110β (Step S2007).

According to the present embodiment, the communication terminal device 120 connects to either of the first storage medium 110α storing the first public key, the first private key corresponding to the first public key and data, and the second storage medium 110β storing the second public key, the second private key corresponding to the second public key and data, and it is made possible that the key access unit 1221 performs readout of the first public key and the first private key from the first storage medium 110α and writing of the first public key and the first private key into the first storage medium 110α, and performs readout of the second public key and the second private key from the second storage medium 110β, and writing of the second public key and the second private key into the second storage medium 110β, the data access unit 1222 performs readout of data from the first storage medium 110α, writing of data into the first storage medium 110α, readout of data from the second storage medium 110β and writing of data into the second storage medium 110β, the transmission unit 1211 transmits data, and the reception unit 1212 receives data.

According to the present embodiment, the communication terminal device 120 further includes the electronic signature unit 1291 for applying an electronic signature to data by using the first private key, whereby it is made possible that the key access unit 1221 reads out the first private key from the first storage medium 110α, the data access unit 1222 reads out data from the first storage medium 110α, the electronic signature unit 1291 applies an electronic signature to the data read out by the data access unit 1222 from the first storage medium 110α by using the first private key, and the transmission unit 1211 transmits the data electronically signed by the electronic signature unit 1291.

According to the present embodiment, the communication terminal device 120 further includes the verification unit 1292 for verifying the electronically signed data by using the first public key, whereby it is made possible that the second storage medium 110β stores the first public key of the first storage medium 110α, the reception unit 1212 receives the electronically signed data, the key access unit 1221 reads out the first public key from the second storage medium 110β, and the verification unit 1292 verifies the electronically signed data received by the reception unit 1212 by using the first public key.

According to the present embodiment, it is possible for the communication terminal device 120 to read out the first private key from the first storage medium 110α it connects, to read out data from the first storage medium 110α it connects, to apply an electronic signature to the data read out from the first storage medium 110α by using the read out first private key, and to transmit the electronically signed data to the backup service device 710 for storing backup data.

According to the present embodiment, it is possible for the communication terminal device 120 to receive backup data whereto an electronic signature is applied by using the first private key stored in the first storage medium 110α from the backup service device 710 for storing backup data, to read out the first public key from the first storage medium 110α it connects, to verify the signature on the backup data of the first storage medium 110α whereto the electronic signature is applied by using the first public key which is read out, and stores the verified backup data of the first storage medium 110α into the second storage medium 110β it connects.

According to the present embodiment, by applying a signature to data by using the private key of the storage medium 110α and backing up the data to the backup service device 710, the source of data generation is recognized as one who possesses the private key of the first storage medium 110α, therefore, it is possible to prevent data from being falsified over the internet 140 as a communication network, in the backup service device 710, etc.

Embodiment 6.
In the above-mentioned first to fifth embodiments, the storage medium stores a public key and a private key that are externally generated beforehand, and the communication terminal device reads out the public key and the private key from the storage medium and uses them. In the following sixth embodiment, it is explained an embodiment wherein, a storage medium has a function of generating a public key and a private key, a function of performing encryption and decryption, and a function of performing application of electronic signature and verification, and wherein, it is unnecessary to read out a private key from outside.

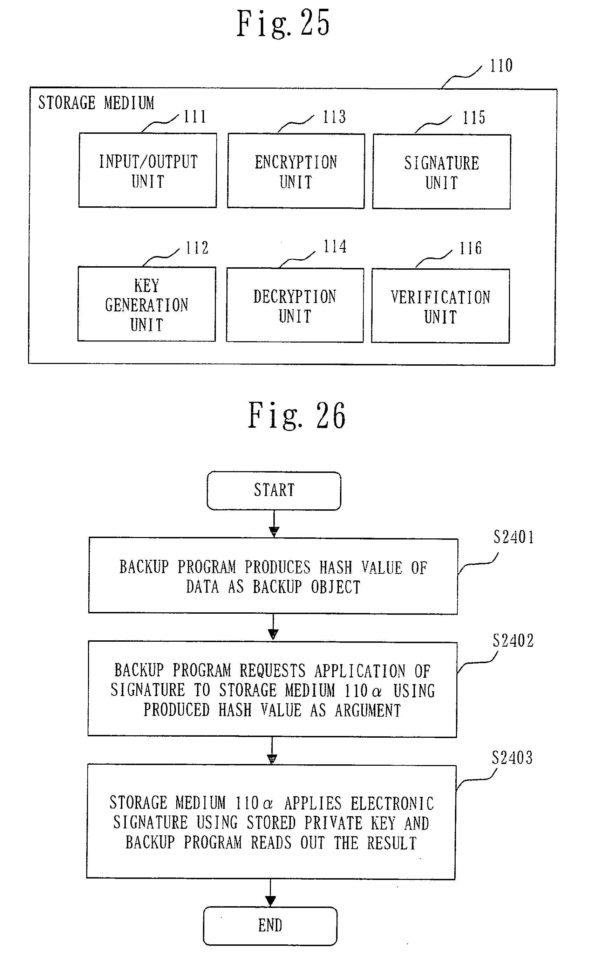

Fig. 25 is a diagram describing a structure of a storage medium 110 according to the sixth embodiment.
The storage medium 110 includes a processing unit as at least any one of an input/output unit 111 for inputting data from outside and outputting data to outside, a key generation unit 112 for generating a private key and a public key corresponding to the private key, an encryption unit 113 for performing encryption of data using a public key, a decryption unit 114 for performing decryption of the encrypted data using a private key, a signature unit 115 for applying an electronic signature to data using a private key, and a verification unit 116 for performing verification of the electronically signed data by using a public key.

The storage medium 110 has an area that cannot be read out from outside,
wherein a private key is stored. That is, outside equipment and the like cannot read out a private key from the storage medium 110.

In the above-mentioned first to fifth embodiments, at the time of performing decryption and application of electronic signature using a private key, the communication terminal device 120 reads out the private key from the storage medium 110, and performs decryption and application of electronic signature using the private key.

In the present embodiment, the key generation unit 112 in the storage medium 110 generates a private key and a public key. When the storage medium 110 encrypts data, the encryption unit 113 performs encryption of the data using the public key, and when the storage medium 110 decrypts the encrypted data, the decryption unit 114 in the storage medium 110 performs decryption of the encrypted data using the private key. Further, when the storage medium 110 applies an electronic signature to data, the signature unit 115 applies an electronic signature to data using the private key, and when the storage medium 110 verifies the electronic signature on the data, the verification unit 116 performs verification of the data whereto the electronic signature is applied by using the public key. In this case, the private key is stored in an area that cannot be read out from outside, and the public key is stored in an area that can be read out from outside.

Consequently, in a case in which an operation using a private key is necessary, the private key generated in the storage medium 110 is not extracted from the storage medium 110, and the communication terminal device 120 writes data into the storage medium 110, performs encryption, decryption, etc. inside the storage medium 110, and reads out the result.

In Step S 1904 in Fig. 23, for example, the backup program applies a signature to data as object of backup by using the private key stored in the storage medium 110α. Meanwhile, this processing according to the present embodiment is described in a flow chart as shown in Fig. 26.

The backup program run by the timer unit 127 inside the communication terminal device 120 produces a hash value of data as object of backup (Step S2401). The backup program requests application of a signature to the storage medium 110α by using the produced hash value as an argument (Step S2402). The storage medium 110α performs application of an electronic signature by using the stored private key, and the backup program reads out the result (Step S2403). In this processing process, the private key does not moves out of interior of the storage medium 110 at all.

According to the present embodiment, it is possible for the storage medium 110 to perform at least any one of inputting data from outside and outputting data to outside by the input/output unit 111, generating a private key and a public key corresponding to the private key by the key generation unit 112, encrypting data using the public key by the encryption unit 113, decrypting the encrypted data using the private key by the decryption unit 114, applying an electronic signature to the data using the private key by the signature unit 115, and performing verification of the electronically signed data using the public key by the verification unit 116.

It is possible for the storage medium 110 to prevent the private key from leakage by making it impossible to read out the private key from outside.

According to the present embodiment, the storage medium 110 includes a function for generating a public key and a private key, a function for performing encryption and decryption, and a function for performing application of an electronic signature and verification, and cuts out the need of reading out the private key from outside, therefore, the private key never moves outside the storage medium, and it is possible to enhance integrity and confidentiality of data. Additionally, it is unnecessary for a user to hold equipment, such as a PC for key generating and its management.

Embodiment 7.
The above-mentioned sixth embodiment is an embodiment wherein, the storage medium includes the function for generating a public key and a private key, the function for performing encryption and decryption, and the function for performing application of an electronic signature and verification, and the need of reading out the private key from outside is cut out. In addition to the sixth embodiment, in the seventh embodiment, it is explained an embodiment wherein, in response to requests for writing and readout of data, generation of a public key and a private key, encryption and decryption, and application of an electronic signature and verification, the storage medium performs authentication of a user having requested them, and performs them only when the user is confirmed as valid.

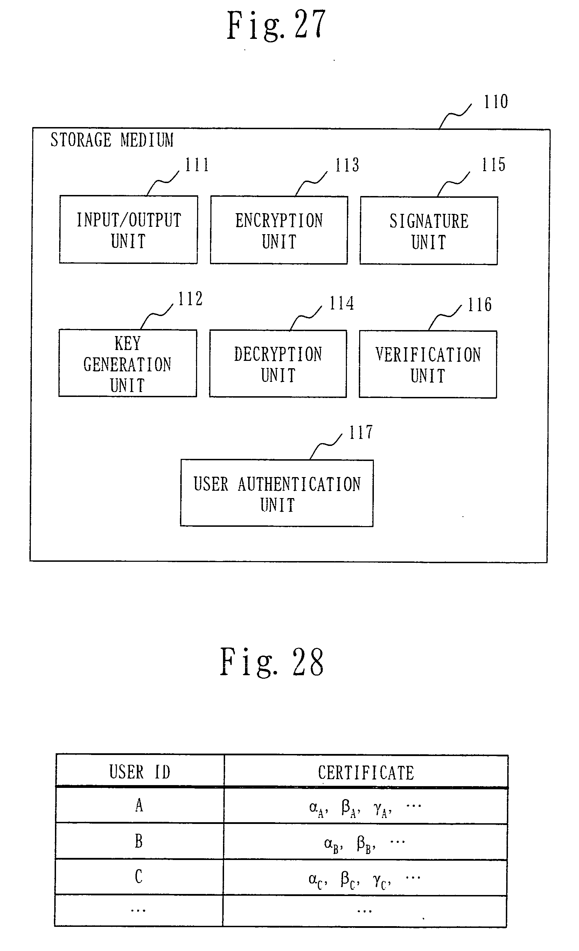

Fig. 27 is a diagram describing a structure of a storage medium 110 according to the seventh embodiment.
The storage medium according to the seventh embodiment, in addition to the structure of the sixth embodiment, further includes a user authentication unit 117 for performing authentication of whether or not a user of a storage medium is valid, and when the user authentication unit 117 authenticates the user as a valid user, performs operations of the processing unit included in the storage medium 110.

In the present embodiment, before performing writing and readout of data, generation of a public key and a private key, encryption and decryption, and application of an electronic signature and verification, the storage medium 110 requests input of authentication information to a user who has requested performing them.

Authentication information may be PIN (Personal Identification Number), feature quantity of a fingerprint or the like, for example, which is not defined specifically. The storage medium 110 performs the above functions, only when the authentication information stored in the storage medium 110 and the authentication information a user inputs by the input unit 124 of the communication terminal device 120 match.

The authentication information may be explicitly input by a user every time the functions of the storage medium 110 are used, or may be stored in the memory unit 123 of the communication terminal device 120 in accordance with conditions such as at a certain period of time or for a certain number of times, and moved to the storage medium 110 automatically by the communication terminal device 120 once it is input by the user.

According to the present embodiment, the storage medium 110 further includes the user authentication unit 117 for performing authentication of whether or not a user of the storage medium 110 is valid, whereby it is made possible to perform the operations of the processing unit included in the storage medium 110 when the user authentication unit 117 authenticates a user as a valid user.

As shown above, a third person not knowing or not having authentication information cannot use the storage medium 110, therefore, it is possible to enhance security much more. Even when the secondary storage medium 110β regularly unused is stolen, for example, since a third person cannot use the medium, fraudulent use such as to use the secondary storage medium 110β to invalidate the primary storage medium 110α can be prevented.

Embodiment 8.
In the above first to seventh embodiments, one user possesses two pieces of storage medium 110 to prepare for a loss. In the following eighth embodiment, it is explained an embodiment in which services are used anonymously, wherein the number of storage media held by one user in the certificate DB 132 is M as two or more than two, and M pieces are held by N people, in which N is the same or less than M.

The management service device 130 includes the certificate database 132 for storing a public key of a storage medium 110 and a certificate for certifying validity of the public key, wherein the certificate database 132 stores public keys of a plurality of storage media 110 and certificates for certifying validity of the plurality of the public keys as a group, and the authentication unit 133 performs authentication of whether or not the storage medium 110 is valid by using at least any one of the public keys belonging to the group, and when the storage medium 110 is authenticated as a valid storage medium, authenticates the storage medium 110 as a storage medium belonging to the group.

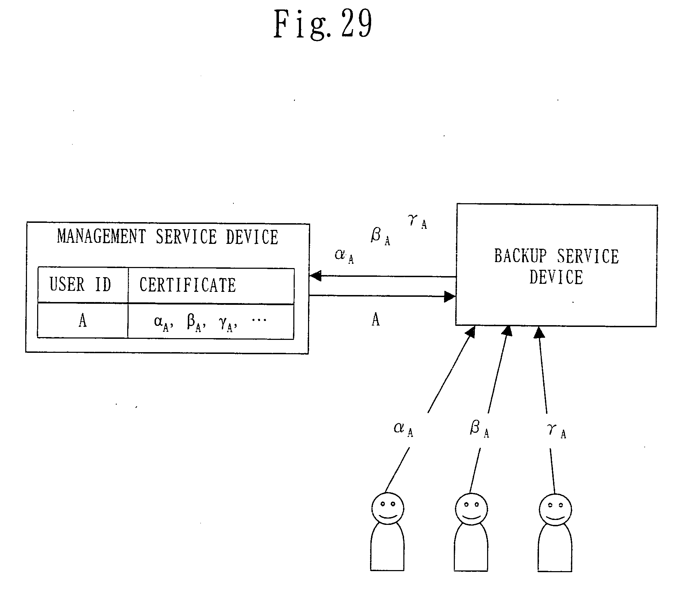

In the present embodiment, the certificate DB 132 of the management service device 130 holds two or more than two of a plurality of certificates for one user ID, as shown in Fig. 28. If it is assumed that the storage media 110 corresponding to these certificates are held by a plurality of users as shown in Fig. 29, the "user" described by the "user ID" is an imaginary user, and is considered as a group sharing the same user ID actually.

The operation for user authentication according to the present embodiment is the same as in Fig. 11. In Fig. 28, three users access the backup service device by using the storage media 110 corresponding to the certificates α_{A}, β_{A}, γ_{A} respectively (from Step S 1101 to Step S 1103). The backup service device 710 requests to the management service device 130 checking of revocation status and obtaining a user ID (Step S 1104). Then, any of the certificates α_{A}, β_{A}, γ_{A} is transmitted to the management service device 130 from the backup service device 710 by the users. The management service device 130 returns authentication failure or a user ID as a result of authentication (from Step S 1105 to Step 1108). At this time, a user ID "A'' is returned to the backup service device for all the users. When information for specifying an individual is not included in a certificate, the backup service device cannot specify except that the person is holding the certificate, and therefore, it is possible to ensure anonymity while performing authentication based on a PKl scheme.

In the present embodiment, even if a public key is used to encrypt as in the fourth embodiment, a private key corresponding to the public key cannot be shared, and therefore, a method for encryption using a public key cannot be used when performing backup to the backup service device. However, the same can be realized by allowing a public key and a private key for encryption shared by a group to be held, in addition to a public key and a private key to be used for authentication. The same applies to the application of signature according to the fifth embodiment.

According to the present embodiment, the management service device 130 includes the certificate database 132 for storing the public key of the storage medium 110 and the certificate for certifying validity of the public key, wherein it is made possible that the certificate database 132 stores the public keys of the plurality of storage media 110 and the certificates for certifying validity of the plurality of the public keys as a group, and the authentication unit 133 performs authentication of whether or not a storage medium 110 is valid by using at least any one of the public keys belonging to the group, and when the storage medium 110 is authenticated as a valid storage medium, authenticates the storage medium 110 as a storage medium belonging to the group.

According to the present embodiment, by allowing a plurality of users to possess the storage media 110 corresponding to a same user ID, it is possible to provide a service of releasing information only to users belonging to a specific group without specifying who the user is.

It is mentioned above the embodiments of the communication terminal device, the management service device and the backup service device in the key management system.
The key management system may include a first storage medium for storing a first private key and a certificate for a first public key corresponding to the first private key, a second storage medium for storing a second private key and a certificate for a second public key corresponding to the second private key, a management service device having a function for generating the certificate for the first public key and the certificate for the second public key, a function for verifying validity of the certificate, and a function for performing authentication of a user as a holder of the first and second storage media by storing the certificate for the first public key and the certificate for the second public key as a pair, and by checking validity of an electronic signature generated with a private key by using the first public key or the second public key corresponding to the private key, and a terminal device whereto the first storage medium or the second storage medium is attached, having a function of performing authentication of a user as a holder of the storage medium and a function of performing communication with the management service device via a communication means.

It is possible to allow the management service device to invalidate the first public key when receiving an invalidation request of the first storage medium from a user after having performed user authentication using the second public key, and after that, to fail in authentication when receiving an authentication request regarding the first storage medium, or to receive an invalidation request of the second storage medium from a user and invalidate the second public key after having performed user authentication by using the first public key, and after that, to fail in authentication when receiving an authentication request regarding the second storage medium.

It is possible to allow the management service to store a primary public key and a secondary public key as a pair, wherein the first public key is the primary public key and the second public key is the secondary public key, and to accept an invalidation request of the first storage medium from a user only after having performed user authentication by using the second storage medium, and not to accept an invalidation request of the second storage medium from a user after having performed user authentication by using the first storage medium.

It is possible to allow the management service device to perform user authentication by using the second storage medium, to receive a registration request of the third storage medium storing the third public key and the third private key corresponding to the third public key from a user, to receive a public key corresponding to the third private key from a user, to generate a certificate for the third public key, to store a certificate for the second public key and the certificate for the third public key as a pair, of the received third public key, to transmit the certificate for the third public key to the user, and after that, to succeed in authentication when receiving an authentication request using the third public key.

It is possible to provide a backup service device for receiving data from a user authenticated by the management service device, storing the data, and transmitting the data to the user when it is requested from the user afterward.

It is possible to allow the first storage medium to store the second public key, the data stored in the first storage medium to be transmitted to the backup service device after being encrypted by using the second public key stored in the first storage medium, and the backup service device to store the encrypted data, and then to allow the encrypted data restored to the second storage medium to be decrypted by using the second private key afterward.

It is possible to allow the second storage medium to store the first public key, to transmit to and store in the backup service device the data stored in the first storage medium after applying a signature to the data by using the first private key stored in the first storage medium, and then to allow the signed data restored to the second storage medium to be verified by using the first public key.

It is possible to allow the first storage medium and the second storage medium to have a function of generating a pair of a public key and a private key, a function of performing encryption and decryption by using a private key, and a function of making it impossible to retrieve the private key from outside.

It is possible to allow the first storage medium and the second storage medium to perform user authentication when a request for storage or retrieval of data, generation of a pair of a public key and a private key, or encryption and decryption by using a private key is made, and to have a function to perform storage or retrieval of data, generation of a pair of a public key and a private key, or encryption and decryption by using a private key, only when the authentication is successful.

It is possible to allow the management service device to manage two or more than two arbitrary number of certificates for a public key of a storage medium corresponding to one user, wherein these plurality of storage media are possessed by an arbitrary number of people, whose number being not more than the number of the storage medium, and wherein each person possesses one or more pieces, so that the management service device identifies the arbitrary number of users as one user, and the users can use a service anonymously.

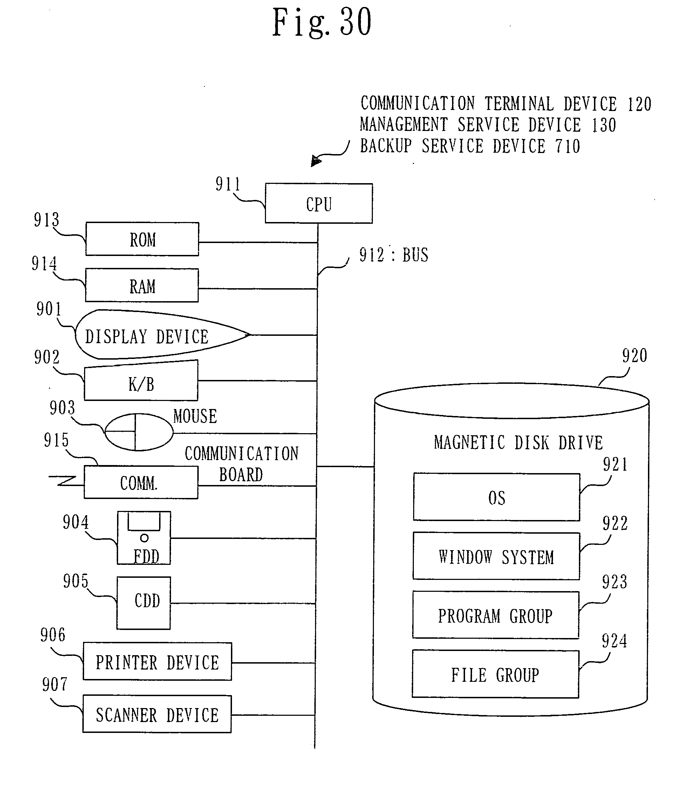

The communication terminal device, the management service device and the backup service device in the key management system described in the above first to eighth embodiments can be realized by a computer. Fig. 30 is a diagram describing a hardware configuration in which the communication terminal device, the management service device and the backup service device in the key management system shown in the first to eighth embodiments are realized by using a computer.

The communication terminal device 120, the management service device 130 and the backup service device includes CPU (Central Processing Unit) 911 for executing a program. CPU 911 connects to ROM 913, RAM 914, a communication board 915, a display device 901, a keyboard (K/B) 902, a mouse 903, FDD (Flexible Disk Drive) 904, a magnetic disk drive 920, CDD (Compact Disc Drive) 905, a printer device 906, and a scanner device 907 via a bus 912.

RAM 914 is an example of a volatile memory. ROM 913, FDD 904, CDD 905, the magnetic disk drive 920 are examples of a nonvolatile memory. These are examples of the memory unit.

The communication board 915 connects to a fax machine, a telephone, a LAN etc. For instance, the communication board 915, K/B902, FDD 904, the scanner device 907 and so on are examples of the input unit. Further, for instance, the display device 901 etc. are examples of the display unit.

The magnetic disk drive 920 stores an operating system (OS) 921, a window system 922, a program group 923, and a file group 924. The program group 923 is executed by CPU 911, OS 921, and the window system 922.

The program group 923 stores programs for executing each function. The programs are retrieved and executed by CPU 911. The file group 924 stores each file. Further, parts of arrow in the flow charts explained in the above embodiments mainly describe data input and output, and for the data input and output, the data is stored in the magnetic disk drive 920, a FD (Flexible Disk), an optical disk, a CD (Compact Disk), an MD (Mini Disk), a DVD (Digital Versatile Disk) and other storage media. Alternatively, the data is transmitted by a signal line and other transmission media.

Further, the communication terminal device 120, the management service device 130 and the backup service device may be realized by firmware stored in ROM 913. Alternatively, they may be executed by software only, hardware only, a combination of software and hardware, or additionally by a combination of firmware.

Further, the program may be stored by means of storage devices by the magnetic disk drive 920, a FD (Flexible Disk), an optical disk, a CD (Compact Disk), an MD (Mini Disk), a DVD (Digital Versatile Disk) and other memory media.

### Brief Description of the Drawings

[Fig. 1] A diagram describing a structure of the key management system according to the first embodiment.
[Fig. 2] A diagram describing private keys and public keys corresponding to the private keys stored in a primary storage medium and a secondary storage medium.
[Fig. 3] A diagram describing an example of the user list stored in the certificate DB according to the first embodiment.
[Fig. 4] A flow chart describing the specific method for invalidating a storage medium according to the first embodiment.
[Fig. 5] A flow chart describing the specific method for authentication according to the first embodiment.
[Fig. 6] A flow chart describing the specific method for authentication using a PKI scheme according to the first embodiment.
[Fig. 7] A flow chart describing the specific method, wherein when the primary storage medium is lost, the secondary storage medium can invalidate the primary storage medium, but the primary storage medium cannot invalidate the secondary storage medium according to the first embodiment.
[Fig. 8] A flow chart describing the specific method for registering a new storage medium to the management service device according to the first embodiment.
[Fig. 9] A diagram describing the structure of the key management system according to the second embodiment.
[Fig. 10] A flow chart describing the specific method for performing backup of data in a storage medium according to the second embodiment.
[Fig. 11] A flow chart describing the specific method for authentication performed by the backup service device according to the second embodiment.
[Fig. 12] A flow chart describing the specific method for restoring data backed up to the backup service device to a storage medium according to the second embodiment.
[Fig. 13] A diagram describing the structure of the key management system according to the third embodiment.
[Fig. 14] A diagram describing unique private keys stored in the primary storage medium and the secondary storage medium according to the third embodiment.
[Fig. 15] A diagram describing an example of the user list stored in the public key DB according to the third embodiment.
[Fig. 16] A flow chart describing the authentication method according to the third embodiment.
[Fig. 17] A diagram wherein the secondary storage medium writes a public key it stores into the primary storage medium according to the fourth embodiment.
[Fig. 18] A diagram describing the structure of the key management system according to the fourth embodiment.
[Fig. 19] A flow chart describing the specific method for encrypting data stored in a storage medium and backing up the data to the backup service device according to the fourth embodiment.
[Fig. 20] A flow chart describing the specific method for decrypting encrypted backup data in the backup service device and restoring the backup data to the storage medium.
[Fig. 21] A diagram wherein the secondary storage medium writes a public key it stores into the primary storage medium, and the primary storage medium writes a public key it stores into the secondary storage medium according to the fifth embodiment.
[Fig. 22] A diagram describing the structure of the key management system according to the fifth embodiment.
[Fig. 23] A flow chart describing the specific method for applying an electronic signature to and performing encryption of data stored in the storage medium, and for backing up the data to the backup service device according to the fifth embodiment.
[Fig. 24] A flow chart describing the specific method for verifying an electronic signature of backup data whereto encryption is performed and the electronic signature is applied in the backup service device, and for decrypting and restoring to the storage medium the backup data according to the fifth embodiment.
[Fig. 25] A diagram describing the structure of the storage medium according to the sixth embodiment.
[Fig. 26] A flow chart describing application of a signature to data as object of backup according to the sixth embodiment.
[Fig. 27] A diagram describing the structure of the storage medium according to the seventh embodiment.
[Fig. 28] A diagram describing an example of the user list stored in the certificate DB according to the eighth embodiment.
[Fig. 29] A diagram describing a usage form when a plurality of users possesses storage media according to the eighth embodiment.
[Fig. 30] A diagram describing a hardware configuration when the communication terminal device, the management device and the backup service device according to each embodiment are realized by using a computer.

### Explanation of References

110, 110α, 110β, 110γ Storage medium, 111 Input/output unit, 112 Key generation unit, 113 Encryption unit, 114 Decryption unit, 115 Signature unit, 116 Verification unit, 117 User authentication unit, 120 Communication terminal device, 121 Communication unit, 1211 Transmission unit, 1212 Reception unit, 122 Access unit, 1221 Key access unit, 1222 Data access unit, 123 Memory unit, 124 input unit, 125 Display unit, 126 Control unit, 127 Timer unit, 1281 Encryption unit, 1282 Decryption unit, 1291 Electronic signature unit, 1292 Verification unit, 130 Management service device, 131 Communication unit, 1311 Transmission unit, 1312 Reception unit, 132 Certificate database (DB), 133 Authentication unit, 134 Certificate issuing unit, 135 Control unit, 140 Internet, 710 Backup service device, 711 Communication unit, 7111 Transmission unit, 7112 Reception unit, 712 Backup unit, 713 Control unit, 714 Authentication unit, 715 Public key database (DB), 901 Display device, 902 Keyboard (K/B), 903 Mouse, 904 FDD, 905 CDD, 906 Printer device, 907 Scanner device, 911 CPU, 912 Bus, 913 ROM, 914 RAM, 915 Communication board, 920 Magnetic disk drive, 921 OS, 922 Window system, 923 Program group, 924 File group.

## Claims

1. A management service device comprising:
a reception unit to receive a request for data processing concerning a first storage medium from a communication terminal device connected to a second storage medium through a communication network; and
an authentication unit to perform an authentication of whether or not the second storage medium connected to the communication terminal device is valid, when the reception unit receives the request for data processing concerning the first storage medium from the communication terminal device.

2. The management service device of claim 1, further comprising a database to store a public key of the first storage medium and a public key of the second storage medium,
wherein, when the reception unit receives a request for invalidation of the first storage medium from the communication terminal device, and when the authentication unit authenticates the second storage medium connected to the communication terminal device as a valid storage medium, the database deletes the public key of the first storage medium stored in the database.

3. The management service device of claim 1, further comprising a database to store a public key of the first storage medium and a public key of the second storage medium;
wherein, when the reception unit receives a request for invalidation of the first storage medium from the communication terminal device, and when the authentication unit authenticates the second storage medium connected to the communication terminal device as a valid storage medium, the database deletes the public key of the first storage medium but does not delete the public key of the second storage medium.

4. The management service device of claim1, further comprising:
a database to store a public key of the second storage medium; and
a certificate issuing unit to issue a certificate for certifying validity of the public key of the second storage medium,
wherein, when the reception unit receives a request for registration of a third storage medium as a new storage medium and a public key of the third storage medium from the communication terminal device, and when the authentication unit authenticates the second storage medium connected to the communication terminal device as a valid storage medium,
the certification issuing unit issues a certificate for certifying validity of the public key of the third storage medium received by the reception unit; and
the database stores the public key of the third storage medium received by the reception unit, and the certificate for certifying validity of the public key of the third storage medium, which is issued by the certificate issuing unit.

5. The management service device of claim 1, further comprising a database to store a public key of the first storage medium with a certificate for certifying validity of the public key of the first storage medium, and a public key of the second storage medium with a certificate for certifying validity of the public key of the second storage medium,
wherein the database registers the public key of the first storage medium with the certificate for certifying validity of the public key of the first storage medium, and the public key of the second storage medium with the certificate for certifying validity of the public key of the second storage medium, as a pair.

6. The management service device of claim 1, further comprising a database to store a public key of a storage medium and a certificate for certifying validity of the public key,
wherein the database stores public keys of a plurality of storage media and certificates for certifying validity of a plurality of public keys as a group,
and wherein, when the authentication unit performs an authentication of whether or not a storage medium is valid, by using at least one public key belonging to the group, and when the authentication unit authenticates the storage medium as a valid storage medium, the authentication unit authenticates the storage medium as a storage medium belonging to the group.

7. A backup service device comprising:
a reception unit to receive data stored in a first storage medium and a request for storing the data as backup data from a communication terminal device connected to the first storage medium through a communication network, and to receive a request for transmitting the backup data from a communication terminal device connected to a second storage medium through a communication network;
an authentication unit to perform an authentication of whether or not the first storage medium connected to the communication terminal device is valid, when the reception unit receives the request for storing the data stored in the first storage medium as backup data from the communication terminal device connected to the first storage medium, and to perform an authentication of whether or not the second storage medium connected to the communication terminal device is valid, when the reception unit receives the request for transmitting the backup data from the communication terminal device connected to the second storage medium;
a backup unit to store the data stored in the first storage medium received by the reception unit as backup data, when the authentication unit authenticates the first storage medium connected to the communication terminal device as a valid storage medium; and
a transmission unit to transmit the backup data stored in the backup unit to the communication terminal device connected to the second storage medium, through the communication network, when the authentication unit authenticates the second storage medium connected to the communication terminal device as a valid storage medium.

8. The backup service device of claim 7,
wherein the backup data is encrypted by using a public key of the second storage medium by the communication terminal device connected to the first storage medium.

9. The backup service device of claim 7,
wherein the backup data is applied an electronic signature by using a private key of the first storage medium by the communication terminal device connected to the first storage medium.

10. A communication terminal device comprising:
a key access unit connecting to either a first storage medium for storing a first public key, a first private key corresponding to the first public key and data, or a second storage medium for storing a second public key, a second private key corresponding to the second public key and data, to perform a readout of the first public key and the first private key from the first storage medium and a writing of the first public key and the first private key to the first storage medium, and to perform a readout of the second public key and the second private key from the second storage medium and a writing of the second public key and the second private key to the second storage medium;
a data access unit to perform a readout of the data from the first storage medium and a writing of the data to the first storage medium, and to perform a readout of the data from the second storage medium and a writing of the data to the second storage medium;
a memory unit to store the first public key and the first private key read out from the first storage medium by the key access unit, and the second public key and the second private key read out from the second storage medium by the key access unit;
a transmission unit to transmit data; and
a reception unit to receive data.

11. The communication terminal device of claim 10, further comprising an encryption unit to encrypt data by using the second public key,
wherein the first storage medium stores the second public key of the second storage medium;
the key access unit reads out the second public key from the first storage medium, and stores the second public key in the memory unit;
the data access unit reads out the data from the first storage medium;
the encryption unit encrypts the data read out from the first storage medium by the data access unit, by using the second public key stored in the memory unit; and
the transmission unit transmits the data encrypted by the encryption unit.

12. The communication terminal device of claim 10, further comprising a decryption unit to decrypt data encrypted by using the second private key,
wherein the reception unit receives the data encrypted;
the key access unit reads out the second private key from the second storage medium, and stores the second private key in the memory unit;
the decryption unit decrypts the data encrypted, which is received by the reception unit, by using the second private key stored in the memory unit; and
the data access unit writes the data decrypted by the decryption unit to the second storage medium.

13. The communication terminal device of claim 10, further comprising an electronic signature unit to apply an electronic signature to data by using the first private key,
wherein the memory unit reads out the first private key from the first storage medium by the key access unit;
the data access unit reads out the data from the first storage medium;
the electronic signature unit to apply an electronic signature to the data read out from the first storage medium by the data access unit, by using the first private key stored in the memory unit; and
the transmission unit transmits the data whereto the electronic signature is applied by the electronic signature unit.

14. The communication terminal device of claim 10, further comprising a verification unit to verify data whereto an electronic signature is applied by using the first public key,
wherein the second storage medium stores the first public key of the first storage medium;
the reception unit receives data whereto an electronic signature is applied;
the key access unit reads out the first private key from the second storage medium, and stores the first private key in the memory unit; and
the verification unit verifies the data whereto the electronic signature is applied, which is received by the reception unit, by using the first public key stored in the memory unit.

15. A storage medium comprising a processing unit as at least any one of:
an input/output unit to perform a data input from outside and a data output to outside;
a key generation unit to generate a private key and a public key corresponding to the private key;
an encryption unit to perform an encryption of data by using the public key;
a decryption unit to perform a decryption of the data encrypted by using the private key;
a signature unit to apply an electronic signature to data by using the private key;
and
a verification unit to perform a verification of the data whereto the electronic signature is applied, by using the public key.

16. The storage medium of claim 15, further comprising a user authentication unit to perform an authentication of whether or not a user of the storage medium is valid,
wherein, when the user authentication unit authenticates the user as a valid user, an operation of the processing units comprised in the storage medium is performed.

17. The storage medium of claim 15, wherein the private key cannot be read out from outside.
